# EUROPEAN PATENT SPECIFICATION

(11) **EP 4 447 424 B1**
(45) Date of publication and mention of the grant of the patent: **06.05.2026**
(21) Application number: 23822852.2
(22) Date of filing: 15.05.2023
(51) Int. Cl.: H04M 1/72403

(54) **WALLPAPER SETTING METHOD AND ELECTRONIC DEVICE**
TAPETENEINSTELLUNGSVERFAHREN UND ELEKTRONISCHE VORRICHTUNG
PROCÉDÉ DE RÉGLAGE DE PAPIER PEINT ET DISPOSITIF ÉLECTRONIQUE

(30) Priority: 14.06.2022 CN 202210673992
(43) Date of publication of application: 16.10.2024
(60) Divisional application: 26169426.9
(73) Proprietor: Honor Device Co., Ltd., Shenzhen, Guangdong 518040 (CN)
(72) Inventor: ZHOU, Shuang, Shenzhen, Guangdong 518040 (CN); HUANG, Liwei, Shenzhen, Guangdong 518040 (CN)
(74) Representative: Beder, Jens
(86) International application number: PCT/CN2023/094256
(87) International publication number: WO 2023/241282

(56) References cited:
- CN-A- 108 196 779
- CN-A- 109 739 602
- CN-A- 110 764 862
- CN-A- 110 869 899
- US-A1- 2021 105 356

## Description

This application claims priority to Chinese Patent Application CN 117 278 666 A (Application No. 202210673992.9), filed with China National Intellectual Property Administration on June 14, 2022 and entitled "WALLPAPER SETTING METHOD AND ELECTRONIC DEVICE".

### TECHNICAL FIELD

This application relates to the field of terminal technologies, and in particular, to a wallpaper setting method and an electronic device.

### BACKGROUND

With the development of flexible screen technologies, a flexible foldable screen (also referred to as a foldable screen) has been used in a mobile phone and other terminal devices, so that a user can fold or unfold the mobile phone and other terminal devices to meet a user's use requirement for different screen sizes.

In a possible implementation, a mobile phone using the foldable screen may include an internal display, an external display, and a back panel, and the internal display is foldable. Wallpapers can be set on a desktop of the internal display and a desktop of the external display separately to meet different aesthetic needs of users.

Document CN 109 739 602 A describes a mobile terminal wallpaper setting method and device, a mobile terminal and a computer readable storage medium, the mobile terminal wallpaper setting method and device are applied to a mobile terminal with a double-sided screen, the mobile terminal comprises a first display touch screen and a second display touch screen. In CN 108 196 779 A a dual screen-based background setting method and apparatus, and a mobile terminal is disclosed. The US 2021/105356 A1 provides a method of synchronizing a modification among displayed screens and an electronic device. The electronic device includes a first display, a memory to store instructions, and at least one processor coupled to the memory.

### SUMMARY

This application provides a wallpaper setting method and an electronic device according to the enclosed independent claims to solve a problem that an operation process, in which if you want to set wallpapers on an internal display and an external display of the electronic device based on a same image, is cumbersome. Advantageous features of the present invention are defined in the corresponding subclaims. In the following, parts of the description and drawings referring to embodiments, which are not covered by the claims, are not presented as embodiments of the invention but as examples useful for understanding the invention.

According to a first aspect, this application provides a wallpaper setting method, applied to an electronic device, where the electronic device includes a first display and a second display. The method provided in this application includes: the electronic device displays a first interface, and the first interface includes a first image; in response to a first operation on the first image, the electronic device displays a second interface, where the second interface includes a first wallpaper, a second wallpaper, and a first control, where the first wallpaper and the second wallpaper are different wallpapers generated based on the first image, the first wallpaper matches the first display, and the second wallpaper matches the second display; and the electronic device sets the first wallpaper as a wallpaper of the first display and sets the second wallpaper as a wallpaper of the second display in response to a second operation on the first control on the second interface.

In the wallpaper setting method provided in this application, a second interface displayed by the electronic device includes a first wallpaper, a second wallpaper and a first control. The first wallpaper and the second wallpaper are different wallpapers generated based on a same image. the electronic device sets the first wallpaper as a wallpaper of the first display and sets the second wallpaper as a wallpaper of the second display in response to a second operation on the first control on the second interface. That is, a user can set the first wallpaper of the first display and the second wallpaper of the second display through one trigger, which is convenient and quick to operate and has high efficiency.

In a possible implementation, that the electronic device displays a second interface includes: the electronic device displays one of the first wallpaper and the second wallpaper on the second interface; and the electronic device updates to display the other of the first wallpaper and the second wallpaper on the second interface in response to a third operation of a user.

In a possible implementation, that the second interface is displayed on the first display, and the electronic device displays a second interface includes: the electronic device displays the first wallpaper on the second interface; and the electronic
device updates to display the second wallpaper on the second interface in response to a fourth operation of a user.

It may be understood that when the second interface is displayed on the first display, the user may pay more attention to the first wallpaper that matches the first display. Therefore, the electronic device preferentially displays the first wallpaper. When the electronic device updates to display the second wallpaper on the second interface in response to a fourth operation of a user, it is more in line with browsing requirements of the user.

In a possible implementation, the second interface includes a first option and a second option, where the first option is used to indicate to display the first wallpaper, the second option is used to indicate to display the second wallpaper, the first option is selected by default, and the fourth operation is a selected operation for the second option.

In a possible implementation, after the electronic device is updated to display the second wallpaper on the second interface in response to a fourth operation of the user, the method further includes:

The electronic device displays first prompt information on the second interface, and the first prompt information is used to indicate to set the second wallpaper on the second display. That the electronic device sets the first wallpaper as a wallpaper of the first display and sets the second wallpaper as a wallpaper of the second display in response to a second operation on the first control on the second interface includes: the electronic device receives a confirmation operation on the first prompt information; and the electronic device sets the first wallpaper as a wallpaper of the first display and sets the second wallpaper as a wallpaper of the second display in response to a second operation on the first control on the second interface.

It may be understood that the first prompt information is used to indicate that the second wallpaper is set on the second display. In this way, when the electronic device displays the first wallpaper on the second interface and receives a confirmation operation on the first prompt information, the first wallpaper is set as a wallpaper of the first display and the second wallpaper is set as a wallpaper of the second display in response to the second operation on the first control, which is more in line with the user's demand for wallpaper setting.

In a possible implementation, that the second interface is displayed on the second display, and the electronic device displays the second interface in response to the first operation on the first image includes: the electronic device displays the second wallpaper on the second interface; and the electronic device updates to display the first wallpaper on the second interface in response to a fifth operation of a user.

It may be understood that when the second interface is displayed on the second display, the user may pay more attention to the second wallpaper that matches the second display. Therefore, the electronic device preferentially displays the second wallpaper. When the electronic device updates to display the first wallpaper on the second interface in response to a fifth operation of a user, it is more in line with browsing requirements of the user.

In a possible implementation, the second interface includes a first option and a second option, where the first option is used to indicate to display the first wallpaper, the second option is used to indicate to display the second wallpaper, the second option is selected by default, and the fifth operation is a selected operation for the first option.

In a possible implementation, after the electronic device is updated to display the first wallpaper on the second interface in response to a fifth operation of the user, the method further includes:

The electronic device displays second prompt information on the second interface, and the second prompt information is used to indicate to set the first wallpaper on the first display. That the electronic device sets the first wallpaper as a wallpaper of the first display and sets the second wallpaper as a wallpaper of the second display in response to a second operation on the first control on the second interface includes: the electronic device receives a confirmation operation on the second prompt information; and the electronic device sets the first wallpaper as a wallpaper of the first display and sets the second wallpaper as a wallpaper of the second display in response to a second operation on the first control on the second interface.

It may be understood that the second prompt information is used to indicate that the first wallpaper is set on the first display. In this way, when the electronic device displays the second wallpaper on the second interface and receives a confirmation operation on the second prompt information, the second wallpaper is set as a wallpaper of the second display and the first wallpaper is set as a wallpaper of the first display in response to the second operation on the first control, which is more in line with the user's demand for wallpaper setting.

In a possible implementation, the first wallpaper and the second wallpaper are simultaneously displayed by the electronic device on the second interface.

In this way, the user can browse the first wallpaper and the second wallpaper at the same time on the second interface at one time, which is convenient and quick.

In a possible implementation, the first wallpaper and the second wallpaper do not overlap.

In a possible implementation, a first window is displayed on the second interface.

When the second interface is displayed on the first display, the first wallpaper is within the second interface and the second wallpaper is within the first window.

When the second interface is displayed on the second display, the second wallpaper is within the second interface and the first wallpaper is within the first window.

When the second interface is displayed on the first display, the user may pay more attention to the first wallpaper that matches the first display. In this way, the first wallpaper is within the second interface, so that the first wallpaper can be browsed more clearly. At the same time, because the second wallpaper is within the first window, the user may further browse the second wallpaper.

Alternatively, because the second interface is displayed on the second display, the user may pay more attention to the second wallpaper that matches the second display. In this way, the second wallpaper is within the second interface, so that the second wallpaper can be browsed more clearly. At the same time, because the first wallpaper is within the first window, the user may further browse the second wallpaper.

In a possible implementation, before setting the first wallpaper as the wallpaper of the first display and setting the second wallpaper as the wallpaper of the second display, the method provided in this application further includes: when the second interface is displayed on the first display, the electronic device displays the first wallpaper in the first window in response to a switching operation on the second interface, and displays the second wallpaper in a first area; or when the second interface is displayed on the second display, the electronic device displays the first wallpaper in the first window in response to a switching operation on the second interface, and displays the second wallpaper in a second area.

In this way, the user may further browse the second wallpaper or the first wallpaper more clearly through the switching operation.

In a possible implementation, before setting the first wallpaper as the wallpaper of the first display and setting the second wallpaper as the wallpaper of the second display, the method provided in this application further includes: the electronic device zooms in the first wallpaper, zooms out the first wallpaper, or adjusts a display area of the first wallpaper in response to an adjustment operation on the first wallpaper; and/or the electronic device enlarges the second wallpaper, reduces the second wallpaper, or adjusts a display area of the second wallpaper in response to the adjustment operation of the second wallpaper.

In this way, the user can adjust sizes and display areas of the first wallpaper and/or the second wallpaper based on a personal requirement.

In a possible implementation, the second interface includes a second control, and the second control is used to indicate to enable a function of setting the first wallpaper of the first display and the second wallpaper of the second display based on a same image, and before setting the first wallpaper as a wallpaper of the first display and setting the second wallpaper as a wallpaper of the second display, the method provided in this application further includes:

the electronic device enables the function of setting the first wallpaper of the first display and the second wallpaper of the second display based on the same image in response to a triggering operation on the second control.

In this way, the electronic device can determine whether to enable the function of setting the first wallpaper of a first display and the second wallpaper of a second display based on the same image and the user's need.

According to a second aspect, this application provides a wallpaper setting apparatus, applied to an electronic device, where the electronic device includes a first display and a second display. The apparatus provided in this application includes: a display unit, configured to display a first interface, and the first interface includes a first image; a display unit, further configured to: in response to a first operation on the first image, the electronic device displays a second interface, where the second interface includes a first wallpaper, a second wallpaper, and a first control, where the first wallpaper and the second wallpaper are different wallpapers generated based on the first image, the first wallpaper matches the first display, and the second wallpaper matches the second display; and the processing unit is configured to: set the first wallpaper as a wallpaper of the first display and set the second wallpaper as a wallpaper of the second display in response to a second operation on the first control on the second interface.

According to a third aspect, this application provides an electronic device, including a processor and a memory, where the memory is configured to store code instructions; and the processor is configured to run the code instructions, causing the electronic device to perform the wallpaper setting method according to the first aspect or any one of implementations of the first aspect.

According to a fourth aspect, this application provides a computer-readable storage medium. The computer-readable storage medium stores instructions. When the instructions are executed, a computer is enabled to perform the wallpaper setting method according to the first aspect or any one of implementations of the first aspect.

According to a fifth aspect, this application provides a computer program product, including a computer program. When the computer program is run, a computer is enabled to perform the wallpaper setting method according to the first aspect or any one of implementations of the first aspect.

It should be understood that the second aspect to the fifth aspect of this application correspond to the technical solution of the first aspect of this application, and the beneficial effects obtained by each aspect and the corresponding feasible implementations are similar. Details are not described herein again.

### BRIEF DESCRIPTION OF DRAWINGS

FIG. 1A, FIG. 1B, FIG. 1C, and FIG. 1D are a schematic diagram of an interface on which an electronic device sets a wallpaper of an internal display in response to a user operation;
FIG. 2 is a schematic diagram of an interface on which an electronic device sets a wallpaper of an external display in response to a user operation;
FIG. 3 is a schematic diagram 1 of a hardware structure of an electronic device according to an embodiment of this application;
FIG. 4A, FIG. 4B, and FIG. 4C are a schematic diagram of an interface on which an electronic device displays a second wallpaper on a wallpaper preview interface in response to a user operation according to an embodiment of this application;
FIG. 5A(1), FIG. 5A(2), FIG. 5A(3), and FIG. 5A(4) are a schematic diagram 1 of an interface on which an electronic device displays a second wallpaper on a desktop of an internal display in response to a user operation according to an embodiment of this application;
FIG. 5B is a schematic diagram 2 of an interface on which an electronic device displays a second wallpaper on a desktop of an internal display in response to a user operation according to an embodiment of this application;
FIG. 6 is a schematic diagram 1 of an interface on which an electronic device displays a first wallpaper on a desktop of an external display in response to a user operation according to an embodiment of this application;
FIG. 7A(1), FIG. 7A(2), FIG. 7A(3), and FIG. 7A(4) are a schematic diagram of an interface on which an electronic device adjusts a first wallpaper and a second wallpaper in response to a user operation according to an embodiment of this application;
FIG. 7B(1), FIG. 7B(2), FIG. 7B(3) are a schematic diagram of an interface on which an electronic device displays an adjusted second wallpaper on a desktop of an internal display in response to a user operation according to an embodiment of this application;
FIG. 8 is a schematic diagram of an interface on which an electronic device displays an adjusted first wallpaper on a desktop of an external display in response to a user operation according to an embodiment of this application;
FIG. 9 is a schematic diagram of an interface on which an electronic device displays a first wallpaper and a second wallpaper on a wallpaper preview interface of an external display in response to a user operation according to an embodiment of this application;
FIG. 10 is a schematic diagram of an interface on which an electronic device displays a first wallpaper on a desktop of an external display and a second wallpaper on a desktop of an internal display in response to a user operation according to an embodiment of this application;
FIG. 11A(1) and FIG. 11A(2) are a schematic diagram 1 of an interface on which an electronic device enables a function of setting a first wallpaper of an external display and a second wallpaper of an internal display based on a same image in response to a user operation according to an embodiment of this application;
FIG. 11B is a schematic diagram 2 of an interface on which an electronic device enables a function of setting a first wallpaper of an external display and a second wallpaper of an internal display based on a same image in response to a user operation according to an embodiment of this application;
FIG. 12A, FIG. 12B, and FIG. 12C are a schematic diagram 3 of an interface on which an electronic device enables a function of setting a first wallpaper of an external display and a second wallpaper of an internal display based on a same image in response to a user operation according to an embodiment of this application;
FIG. 13 is a schematic diagram 4 of an interface on which an electronic device enables a function of setting a first wallpaper of an external display and a second wallpaper of an internal display based on a same image in response to a user operation according to an embodiment of this application;
FIG. 14A, FIG. 14B, FIG. 14C, and FIG. 14D are a schematic diagram 2 of an interface on which an electronic device displays a second wallpaper on a desktop of an internal display in response to a user operation according to an embodiment of this application;
FIG. 15 is a schematic diagram 2 of an interface on which an electronic device displays a first wallpaper on a desktop of an external display in response to a user operation according to an embodiment of this application;
FIG. 16 is a schematic diagram 3 of an interface on which an electronic device displays a first wallpaper on a desktop of an external display in response to a user operation according to an embodiment of this application;
FIG. 17 is a schematic diagram 3 of an interface on which an electronic device displays a second wallpaper on a desktop of an internal display in response to a user operation according to an embodiment of this application;
FIG. 18A, FIG. 18B, FIG. 18C, and FIG. 18D are a schematic diagram of an interface on which an electronic device displays a first wallpaper and a second wallpaper on a wallpaper preview interface of an internal display in response to a user operation according to an embodiment of this application;
FIG. 19 is a schematic diagram of an interface on which an electronic device displays a first wallpaper and a second wallpaper on a wallpaper preview interface of an external display in response to a user operation according to an embodiment of this application;
FIG. 20 is a schematic diagram of a functional module of a wallpaper setting apparatus according to an embodiment of this application;
FIG. 21 is a schematic diagram 2 of a hardware structure of an electronic device according to an embodiment of this application; and
FIG. 22 is a schematic diagram of a structure of a chip according to an embodiment of this application.

### DESCRIPTION OF EMBODIMENTS

For ease of describing the technical solutions in embodiments of this application clearly, in embodiments of this application, terms such as "first" and "second" are used to distinguish same or similar items with a basically same function and role. For example, a first value and a second value are merely used to distinguish between different values, and are not intended to limit a sequence thereof. A person skilled in the art may understand that the terms "first", "second", and the like, and do not limit a quantity and an execution order, and the terms "first", "second", and the like are not limited to be necessarily different.

It should be noted that, in this application, the term "exemplary" or "for example" is used to represent giving an example, an illustration, or a description. Any embodiment or design scheme described as an "exemplary" or "for example" in this application should not be explained as being more preferred or having more advantages than another embodiment or design scheme. Exactly, the terms such as "exemplary" and "for example" as used herein are intended to present the related concept in a specific implementation.

In this application, "at least one" refers to one or more, and "a plurality of" refers to two or more. The term and/or describes an association relationship for describing associated objects and represents that three relationships may exist. For example, A and/or B may represent: only A exists, both A and B exist, and only B exists, where A and B may be singular or plural. The character "/" generally indicates an "or" relationship between the associated objects. "At least one of the following items" or a similar expression means any combination of these items, including a single item (item) or any combination of a plurality of items (items). For example, at least one of a, b, or c may represent: a, b, c, a-b, a-c, b-c, or a-b-c, where a, b, and c may be single or multiple.

With the development of a flexible screen technology, a flexible foldable screen (also referred to as a foldable screen) has been applied to a mobile phone and other terminal devices. A terminal device using the foldable screen can include an internal display and an external display, and the internal display can be folded.

Wallpapers can be set on a desktop of the internal display and a desktop of the external display separately to meet different aesthetic needs of users. However, when the user sets the desktop of the internal display and the desktop of the external display, setting steps are cumbersome and inefficient, which affects the user experience.

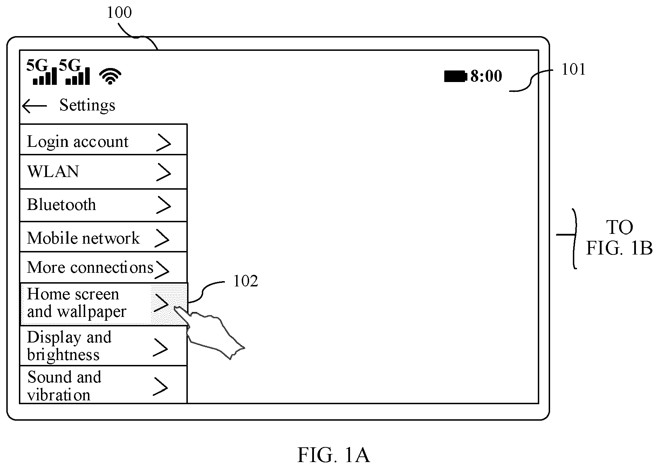

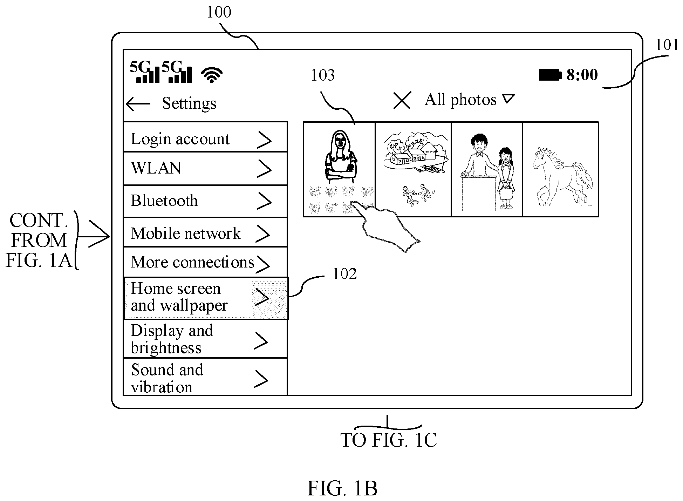

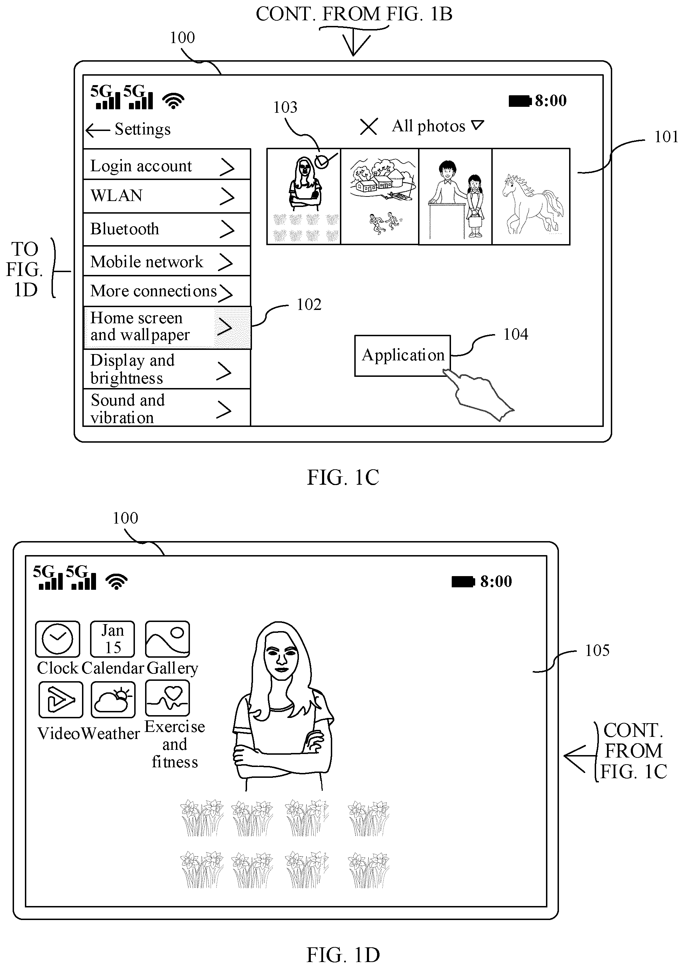

As shown in FIG. 1A, an internal display of an electronic device 100 displays a function setting interface 101, and the function setting interface 101 includes a desktop and wallpaper option 102. As shown in FIG. 1A and FIG. 1B, the electronic device 100 displays a plurality of images in response to a user's click operation on the desktop and wallpaper option 102. As shown in FIG. 1B and FIG. 1C, the electronic device 100 may select an image 103 and display an application button 104 in response to a user's click operation on the image 103 in the plurality of images. As shown in FIG. 1C and FIG. 1D, the electronic device 100 sets a wallpaper of a desktop 105 of the internal display of the electronic device 100 based on the image 103 in response to a click operation on the application button 104 by the user.

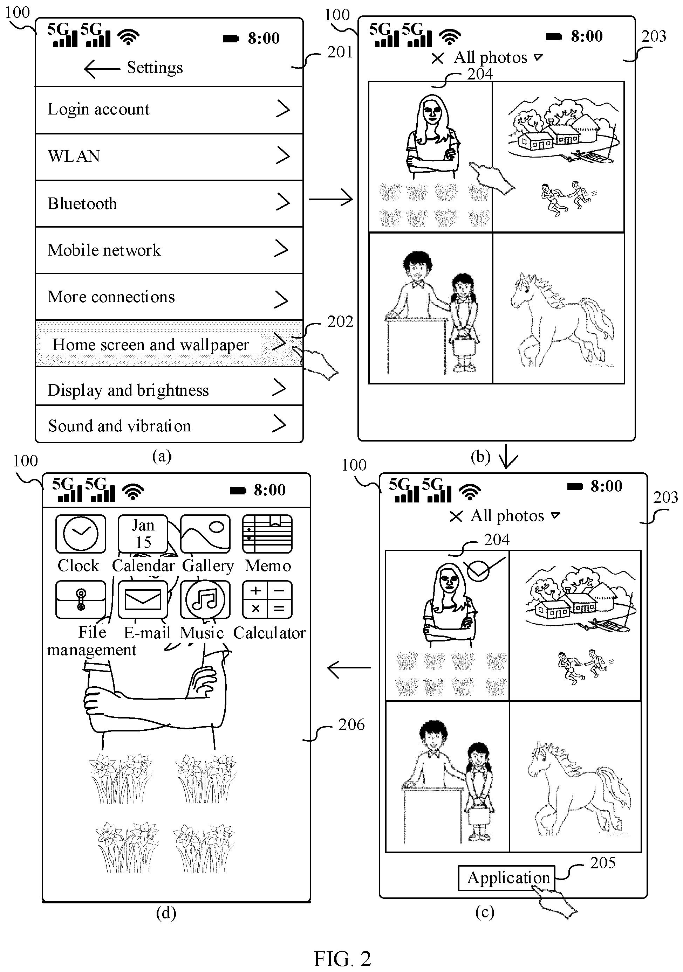

In order to make an external display of the electronic device 100 also set a wallpaper based on the image 103, when a "Setting icon" of a desktop of the external display of the electronic device 100 is triggered by a user, as shown in (a) in FIG. 2, the external display of the electronic device 100 displays a function setting interface 201, and the function setting interface 201 includes a desktop and wallpaper option 202. The electronic device 100 displays an image selection interface 203 in response to a user's click operation on the desktop and wallpaper option 202. The image selection interface 203 includes a plurality of images. As shown in (a) and (b) in FIG. 2, the electronic device 100 may select an image 204 and display an application button 205 in response to a user's click operation on the image 204 (namely, the image 103) in the plurality of images. As shown in (c) and (d) in FIG. 2, the electronic device 100 sets a wallpaper of a desktop 206 of the external display of the electronic device 100 based on the image 204 in response to a click operation on the application button 205 by the user.

It can be learned that in the above process, if wallpapers are set on the internal display and the external display of the electronic device 100 based on a same image, the operation process is cumbersome, the efficiency is low, and the user experience is affected.

In other scenarios, the electronic device 100 may alternatively crop or stretch the wallpaper of the desktop 105 of the internal display, and the wallpaper of the desktop 206 of the external display of the electronic device 100 is obtained. This causes deformation of the wallpaper of the desktop 206 of the external display.

In view of this, this application provides a wallpaper setting method. A second interface displayed by the electronic device includes a first wallpaper, a second wallpaper and a first control. The first wallpaper and the second wallpaper are different wallpapers generated based on a same image. The electronic device sets the first wallpaper as a wallpaper of a first display and sets the second wallpaper as a wallpaper of a second display in response to a second operation on the first control on the second interface. That is, a user can set the first wallpaper of the first display and the second wallpaper of the second display through one trigger, which is convenient and quick to operate and has high efficiency.

It may be understood that embodiments of this application can be applied to an electronic device having a foldable screen. The electronic device may also be referred to as a terminal (terminal), user equipment (user equipment, UE), a mobile station (mobile station, MS), a mobile terminal (mobile terminal, MT), or the like. The electronic device may be a mobile phone (mobile phone), a smart TV, a wearable device, a tablet computer (Pad), a computer having a wireless transmission and receiving function, a virtual reality (virtual reality, VR) electronic device, an augmented reality (augmented reality, AR) electronic, a wireless terminal related to industrial control (industrial control), a wireless terminal related to self-driving (self-driving), a wireless terminal related to remote medical surgery (remote medical surgery), a wireless terminal related to a smart grid (smart grid), a wireless terminal related to transportation safety (transportation safety), a wireless terminal related to a smart city (smart city), a wireless terminal related to a smart home (smart home), or the like. Embodiments of this application impose no limitation on a specific technology and a specific device form used by the electronic device.

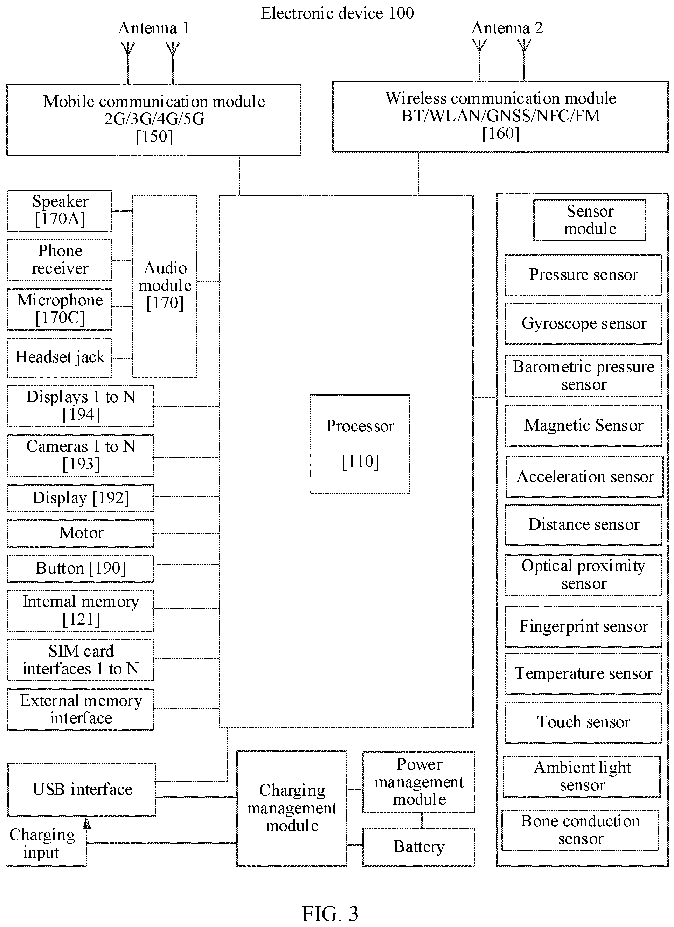

To better understand embodiments of this application, the following describes a structure of the electronic device in embodiments of this application. For example, FIG. 3 is a schematic diagram of a structure of an electronic device according to an embodiment of this application.

The electronic device may include a processor 110, an external memory interface 120, an internal memory 121, a universal serial bus (universal serial bus, USB) interface 130, a charging management module 140, a power management module 141, an antenna 1, an antenna 2, a mobile communication module 150, a wireless communication module 160, an audio module 170, a speaker 170A, a telephone receiver 170B, a microphone 170C, a sensor module 180, a key 190, an indicator 192, a camera 193, a display 194, and the like. The sensor module 180 may include a pressure sensor 180A, a gyroscope sensor 180B, a barometric pressure sensor 180C, a magnetic sensor 180D, an acceleration sensor 180E, a range sensor 180F, a proximity light sensor 180G, a fingerprint sensor 180H, a temperature sensor 180J, a touch sensor 180K, an ambient light sensor 180L, a bone conduction sensor 180M, and the like.

It may be understood that the structure shown in embodiments of this application does not constitute a specific limitation on the electronic device. In some other embodiments in this application, the electronic device may include more or fewer components than those shown in the figure, or some components may be combined, or some components may be split, or a different component deployment may be used. The illustrated components may be implemented in hardware, software, or a combination of software and hardware.

The processor 110 may include one or more processing units. Different processing units may be separate devices, or may be integrated into one or more processors. A memory may also be disposed in the processor 110, configured to store instructions and data.

The USB interface 130 is an interface that complies with the USB standard specification, and may be specifically a Mini USB interface, a Micro USB interface, a USB Type C interface, and the like. The USB interface 130 may be configured to be connected to the charger to charge the electronic device, or may be used for data transmission between the electronic device and a peripheral device. The USB interface 130 may also be configured to connect to a headset to play audio through the headset. The interface may alternatively be configured to be connected to another electronic device like an AR device.

The charging management module 140 is configured to receive charging input from the charger. The charger may be a wireless charger, or may be a wired charger. The power management module 141 is configured to connect to the charging management module 140 and the processor 110.

A wireless communication function of the electronic device may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device may be configured to cover one or more communication frequency bands. Different antennas may be further multiplexed, to improve antenna utilization.

The mobile communication module 150 can provide a wireless communication solution including such as 2G/3G/4G/5G applied on the electronic device. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and send the electromagnetic wave to the modem processor for demodulation.

The wireless communication module 160 may provide a solution for wireless communication including a wireless local area network (wireless local area network, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), and the like to be applied to the electronic device.

The electronic device implements a display function through the GPU, the display 194, the application processor. The GPU is a microprocessor for image processing and connects the display 194 and the application processor. The GPU is configured to perform mathematical and geometric calculations, and is configured to render graphics.

The display 194 is configured to display an image, a video, and the like. The display 194 includes a panel. In some embodiments, the electronic device may include one or N displays 194, and N is a positive integer greater than 1. In embodiments of this application, the electronic device may include two displays: an internal display and an external display, and the internal display and the external display are respectively located on two opposite surfaces of the electronic device. The internal display includes a first sub-screen and a second sub-screen. When the electronic device is in a folded state, the external display is exposed to the surface of the electronic device, and an included angle between the surfaces that are of the first sub-screen and the second sub-screen and that are exposed to the outside is less than a first angle threshold. When the electronic device is in an unfolded state, the included angle between the surfaces that are of the first sub-screen and the second sub-screen and that are exposed to the outside is greater than a second angle threshold. 0° ≤ the first angle threshold < 180°, 0° < the second angle threshold ≤ 180°, and the first angle threshold ≤ the second angle threshold. The electronic device detects that it is in the unfolded state and displays a user interface on the internal display. The electronic device detects that it is in the folded state and displays the user interface on the external display.

The electronic device may implement a photographing function by using the ISP, the camera 193, the video codec, the GPU, the display 194, the application processor, and the like.

The camera 193 is configured to capture a still image or video. In some embodiments, the electronic device may include 1 or N cameras 193, where N is a positive integer greater than 1.

The external memory interface 120 may be configured to be connected to an external storage card such as a Micro SD card, to expand a storage capability of the electronic device. The external memory card communicates with the processor 110 by using the external memory interface 120, to implement a data storage function, for example, store files such as music and a video into the external storage card.

The internal memory 121 may be configured to store computer executable program code, where the executable program code includes an instruction. The internal memory 121 may include a program storage area and a data storage area.

The electronic device may implement an audio function, such as music playing or recording, by using the audio module 170, the speaker 170A, the telephone receiver 170B, the microphone 170C, the application processor, and the like.

The audio module 170 is configured to convert digital audio information into analog audio signal output, and is also configured to convert analog audio input into a digital audio signal. The speaker 170A, also referred to as a "horn", is configured to convert an electrical audio signal into a sound signal. Music can be listened to or a hands-free call can be answered by using the speaker 170A in the electronic device. The telephone receiver 170B, also referred to as a "receiver", is configured to convert an audio electrical signal into a sound signal. When the electronic device is used to answer a call or receive voice information, the telephone receiver 170B may be put close to a human ear, to receive the voice. The microphone 170C, also referred to as "voice tube" or "mike", is configured to convert a sound signal into an electrical signal.

The pressure sensor 180A is configured to sense a pressure signal, and can convert the pressure signal into an electrical signal. In some embodiments, the pressure sensor 180A may be disposed on the display 194. The gyroscope sensor 180B may be configured to determine a motion posture of the electronic device. The biometric pressure sensor 180C is configured to measure an atmospheric pressure. The magnetic sensor 180D includes a Hall sensor. The acceleration sensor 180E may detect magnitudes of acceleration of the electronic device in various directions (generally on three axes). The distance sensor 180F is configured to measure a distance. The optical proximity sensor 180G may include, for example, a light-emitting diode (LED) and an optical detector, for example, a photodiode. The ambient light sensor 180L is configured to perceive ambient light brightness. The fingerprint sensor 180H is configured to collect a fingerprint. The temperature sensor 180J is configured to detect temperature. The touch sensor 180K is also referred to as a "touch device". The touch sensor 180K may be disposed on the display 194. The touch sensor 180K and the display 194 form a touchscreen, which is also referred to as a "touchscreen". The bone conduction sensor 180M may collect a vibration signal.

The key 190 includes a power-on key, a volume key, and the like. The key 190 may be a mechanical key, or a touch-type key. The electronic device may receive a key input, and generate a key signal input related to user setting and function control of the electronic device. The indicator 192 may be an indicator light, and may be configured to indicate a charging status and a power change, or may be configured to indicate a message, a missed call, a notification, or the like.

A software system of the electronic device may use a layered architecture, an event-driven architecture, a microkernel architecture, a micro service architecture, a cloud architecture, or the like. Details are not described herein again.

In this embodiment of this application, the software structure of the electronic device is exemplarily described by using an Android system with a layered architecture as an example. In some embodiments, an Android system is divided into five layers: an application (application) layer, an application framework (application framework) layer, an Android runtime (Android runtime), a system library, a hardware abstract layer (hardware abstract layer, HAL), and a kernel layer (kernel).

The application layer may include a series of application packages, and the application layer runs the application by calling an application programming interface (application programming interface, API) provided by the application framework layer. As shown in FIG. 3, the application packages may include applications such as a camera, a gallery, a calendar, phone, a map, navigation, WLAN, Bluetooth, music, video, and an SMS message.

The application framework layer provides the API and programming framework for applications at the application layer. The application framework layer includes some predefined functions. The application framework layer may include a window manager, a content provider, a view system, a phone manager, a resource manager, a notification manager, and the like.

The android runtime includes a kernel library and a virtual machine. The android runtime is responsible for scheduling and management of an android system. The core library includes two parts: one part is a performance function that the Java language needs to invoke, and the other part is a core library of Android. The application layer and the application framework layer are run in the virtual machine. The virtual machine executes Java files of the application layer and the application framework layer as binary files. The virtual machine is used to execute functions such as object lifecycle management, stack management, thread management, security and exception management, and garbage collection.

The system library may include a plurality of function modules, for example, a surface manager (surface manager), a media library (Media Library), a three-dimensional graphics processing library (for example, OpenGL ES), and a 2D graphics engine (for example, SGL).

The hardware abstract layer may include a plurality of library modules, such as a camera library module, and a motor library module. The Android system can load corresponding library modules for device hardware, and then realize the purpose of accessing the device hardware by the application framework layer. The device hardware may include, for example, a motor, and a camera in the electronic device.

The kernel layer is a layer between hardware and software. The kernel layer is used to drive the hardware to work. The kernel layer includes at least a display driver, a camera driver, an audio driver, a sensor driver, a motor driver, and the like. This is not limited in this embodiment of this application.

The following describes the technical solutions of this application and how to resolve the foregoing technical problems according to the technical solutions of this application in detail by using specific embodiments. The following several specific embodiments may be independently implemented, and may also be combined with each other, and the same or similar concepts or processes may not be described repeatedly in some embodiments.

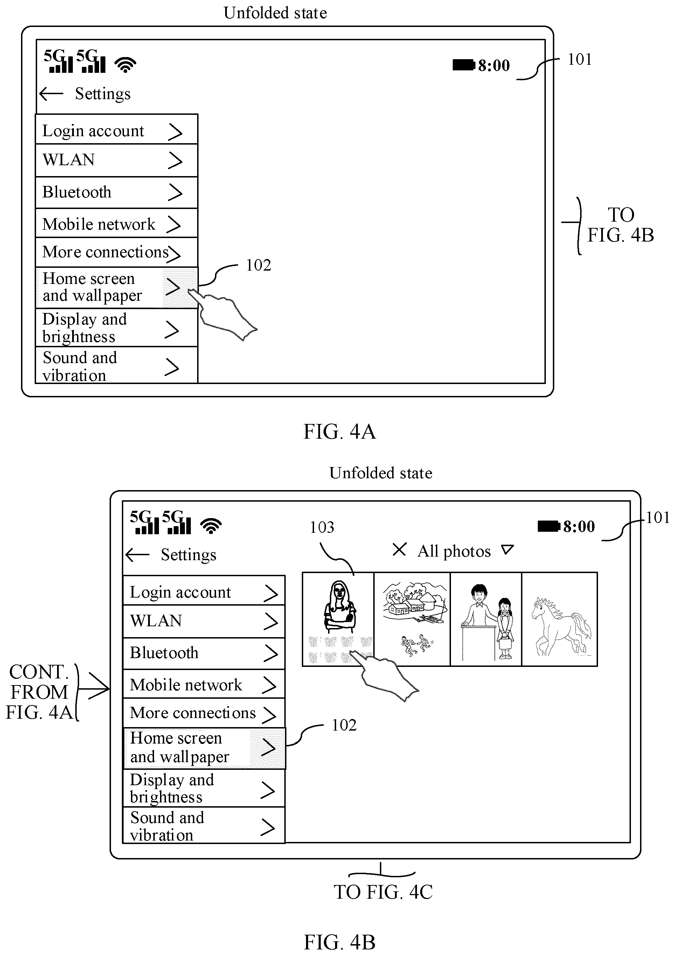

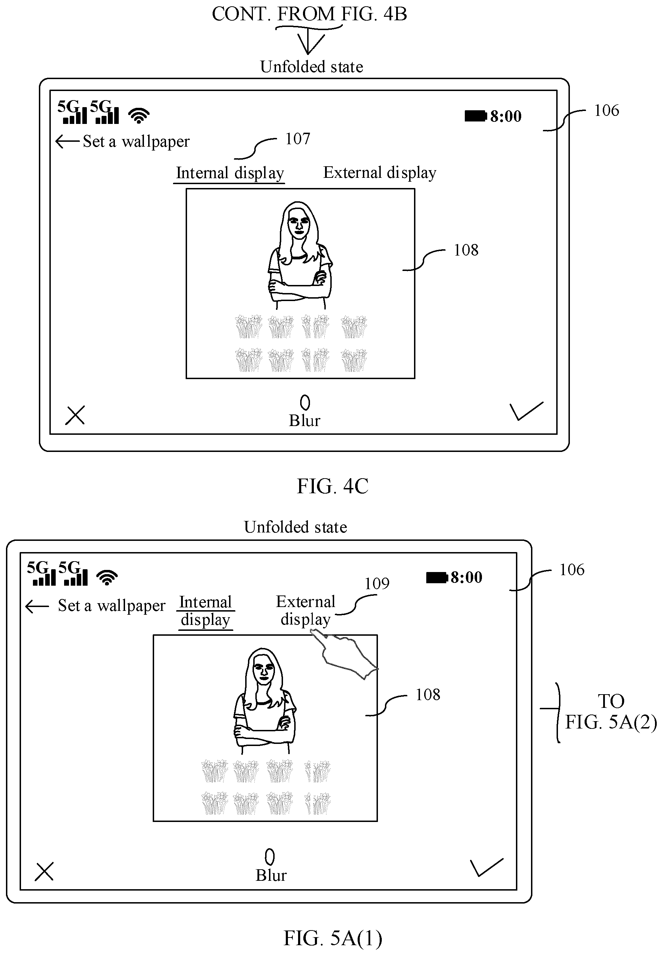

When a "Setting icon" of a desktop of an internal display of an electronic device is triggered by a user, as shown in (a) in FIG. 4A, FIG. 4B, and FIG. 4C, the internal display of the electronic device displays a function setting interface 101, the function setting interface 101 includes an option list, and the option list includes a desktop and wallpaper option 102. The electronic device displays a plurality of images on the function setting interface 101 in response to a user's click operation on the desktop and wallpaper option 102.

As shown in FIG. 4A and FIG. 4B, the electronic device may crop the image 103 based on a size of an external display of the electronic device in response to a user's click operation (namely, a first operation) on the image 103 (namely, a first image) in the plurality of images. Further, the electronic device obtains a first wallpaper that matches the external display (namely, a first display) of the electronic device, and crops the image 103 based on a size of the internal display (namely, a second display) of the electronic device to obtain a second wallpaper that matches the internal display of the electronic device. It may be understood that, because both the first wallpaper and the second wallpaper are generated based on the image 103 selected by the user, deformation of the first wallpaper and the second wallpaper due to a plurality of stretches is not caused.

Further, as shown in FIG. 4C, the electronic device displays a wallpaper preview interface 106 (namely, a second interface), and the wallpaper preview interface 106 includes an internal screen option 107 (namely, a second option). When the internal screen option 107 is selected, the wallpaper preview interface 106 displays a second wallpaper 108. In this way, the user can preview the second wallpaper 108 on the wallpaper preview interface 106.

It may be understood that, when the wallpaper preview interface 106 is displayed on the internal display, the user may pay more attention to the second wallpaper 108 that matches the internal display. Therefore, the electronic device preferentially displays the second wallpaper 108, which is more in line with a browsing requirement of the user.

It should be noted that, the internal screen option 107 may be selected when triggered by the user, or the internal screen option 107 is selected by default when the electronic device displays the wallpaper preview interface 106 in response to a user's operation of selecting the image 103 in FIG. 4B. This is not limited herein.

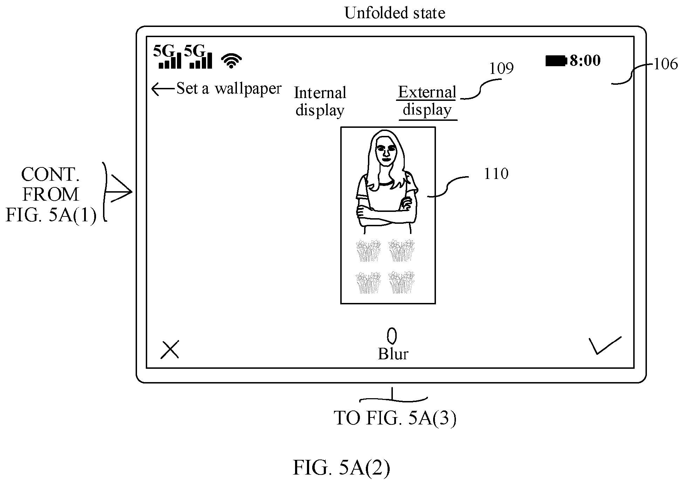

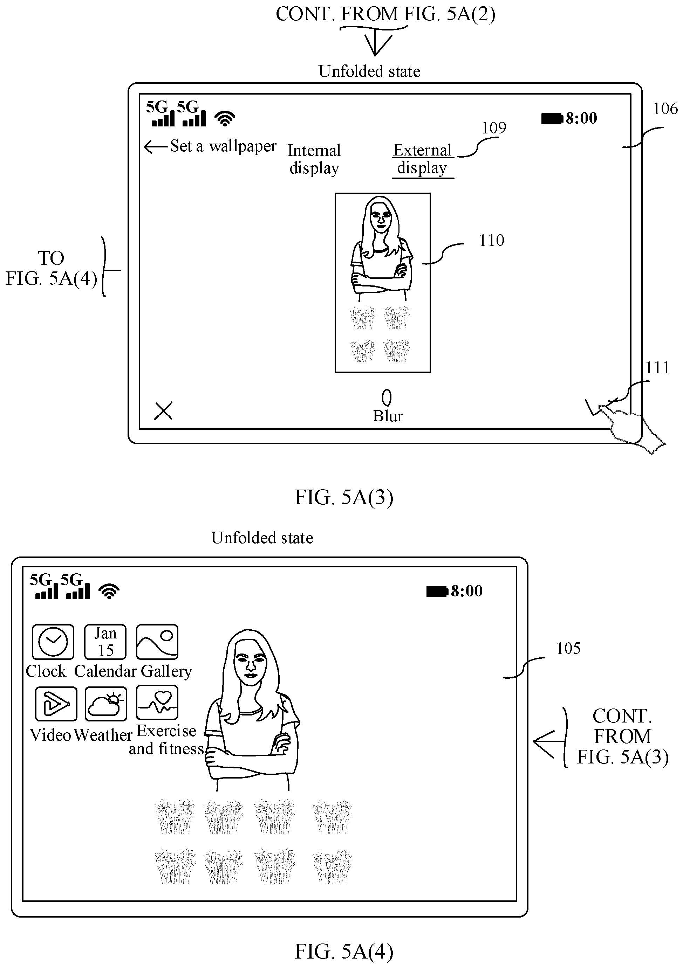

In addition, as shown in FIG. 5A(1) and FIG. 5A(2), the electronic device may alternatively display a first wallpaper 110 on the wallpaper preview interface 106 in response to a user's click operation (namely, a third operation) on an external screen option 109. In this way, the user can preview the first wallpaper 110 on the wallpaper preview interface 106. It can be learned that both the first wallpaper 110 and the second wallpaper 108 can be displayed on the wallpaper preview interface 106. Therefore, the user can browse the first wallpaper 110 and the second wallpaper 108 on the wallpaper preview interface 106.

In other words, the electronic device displays one of the first wallpaper and the second wallpaper on the wallpaper preview interface 106. In response to the third operation performed by the user, the electronic device updates to display the other one of the first wallpaper and the second wallpaper on the wallpaper preview interface 106.

Further, as shown in FIG. 5A(3), the wallpaper preview interface 106 further includes a first control 111, and the first control 111 is used to indicate to set a wallpaper. The electronic device may alternatively set the first wallpaper 110 on a desktop of the external display and set the second wallpaper 108 on a desktop of the internal display in response to a user's click operation on the first control 111 (that is, a confirmation operation on the first wallpaper 110 and the second wallpaper 108, namely, the second operation).

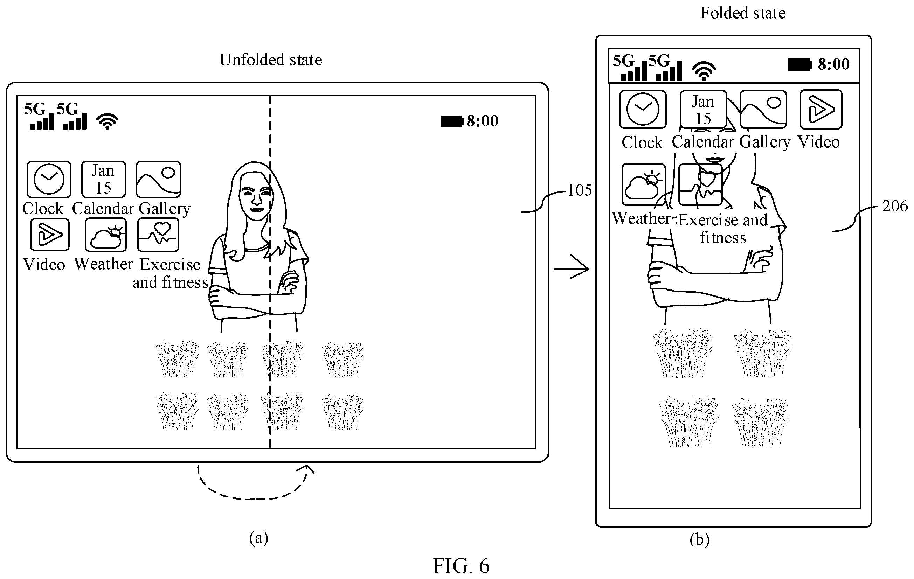

As shown in FIG. 5A(4), when the electronic device displays a desktop 105 on the internal display, the desktop 105 includes the second wallpaper. As shown in (a) and (b) in FIG. 6, when the electronic device is folded, the external display of the electronic device displays a desktop 206. The desktop 206 includes the first wallpaper.

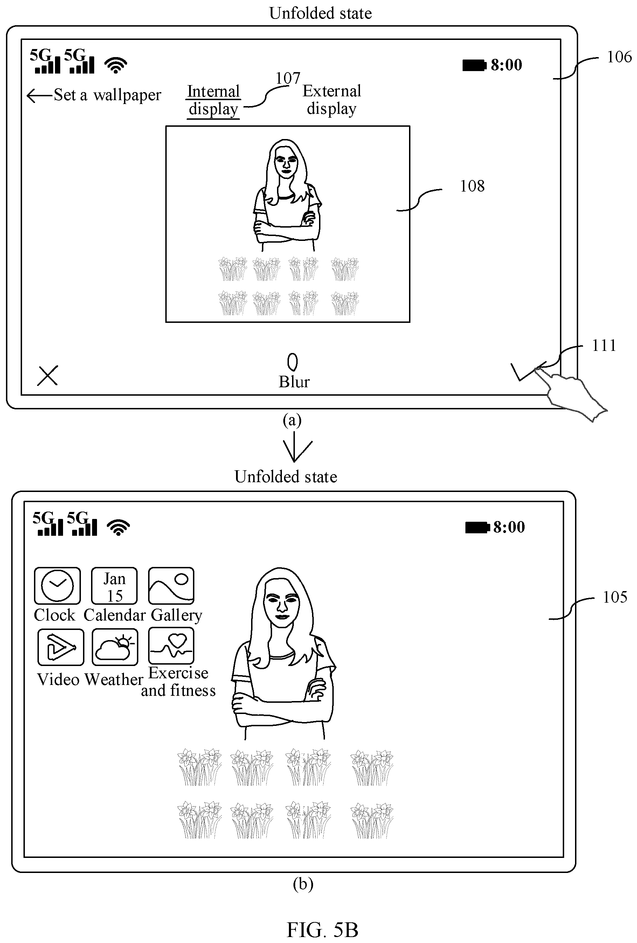

In other embodiments, the electronic device displays the second wallpaper 108 on the wallpaper preview interface 106. As shown in FIG. 5A(1), the electronic device may alternatively set the first wallpaper 110 on a desktop of the external display and set the second wallpaper 108 on a desktop of the internal display in response to a user's click operation on the first control 111 (that is, a confirmation operation on the first wallpaper 110 and the second wallpaper 108). As shown in (b) in FIG. 5B, when the electronic device displays a desktop 105 on the internal display, the desktop 105 includes the first wallpaper. Still as shown in (a) and (b) in FIG. 6, when the electronic device is folded, the external display of the electronic device displays a desktop 206. The desktop 206 includes the second wallpaper.

In conclusion, the wallpaper setting method provided in the embodiments corresponding to FIG. 4A to FIG. 6, when the electronic device is in an unfolded state and the user sets a wallpaper on the internal display of the electronic device, and after the electronic device selects an image 204, the first wallpaper 110 that matches the external display and the second wallpaper 108 that matches the internal display may be displayed on the wallpaper preview interface 106. In this way, the user can view the first wallpaper 110 and the second wallpaper 108 on a same interface. In addition, the user can set the first wallpaper 110 on the desktop 206 of the external display and set the second wallpaper 108 on the desktop 105 of the internal display only by inputting the confirmation operation on the first wallpaper 110 and the second wallpaper 108 on the wallpaper preview interface 106. That is, the user can set the first wallpaper 110 of the external display and the second wallpaper 108 of the internal display through one trigger, which is convenient and quick to operate and has high efficiency.

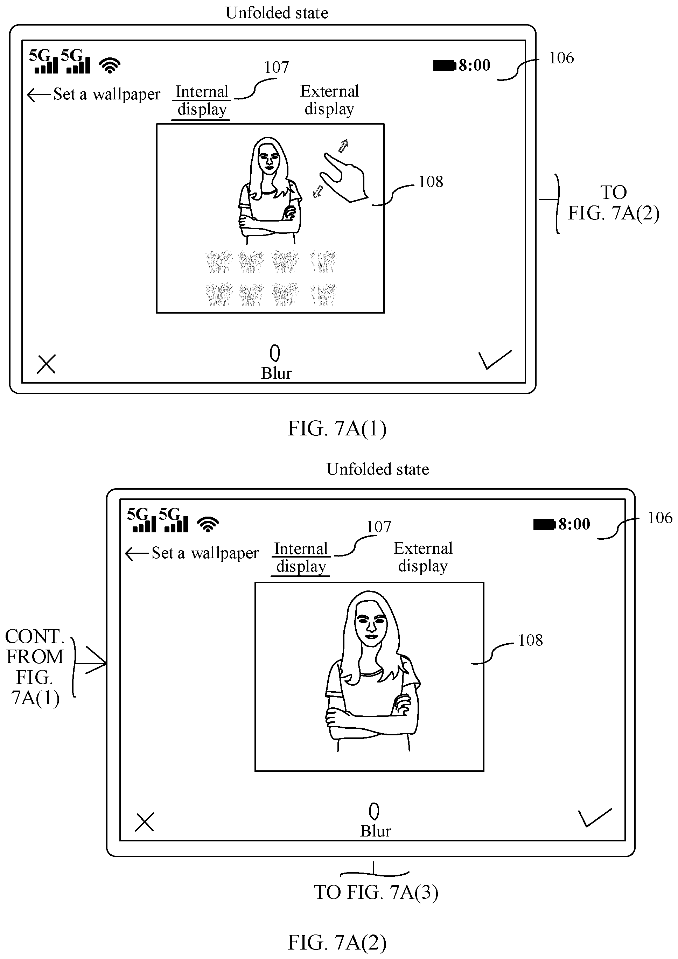

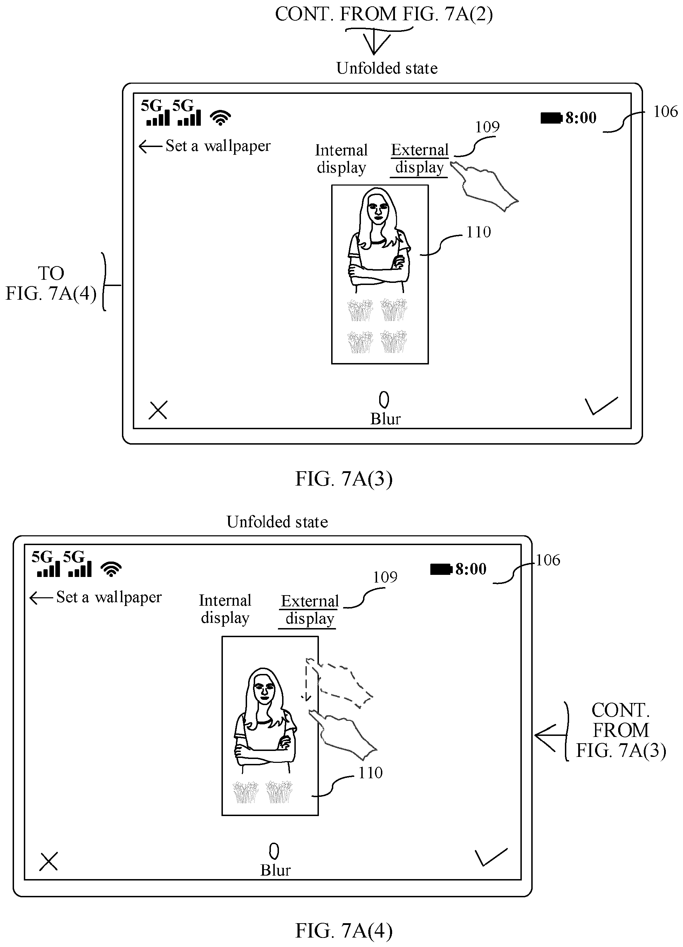

In addition, on the basis of the embodiment corresponding to FIG. 4C, as shown in in FIG. 7A(1) and FIG. 7A(2), the electronic device may alternatively scale up the second wallpaper 108 in response to a user's zoom-in operation on the second wallpaper 108. As shown in FIG. 7A(2) and FIG. 7A(3), the electronic device may alternatively display the first wallpaper 110 on the wallpaper preview interface 106 in response to a user's triggering operation on the external screen option 109. In addition, the electronic device may alternatively move a display area of the first wallpaper 110 in response to a user's movement operation on the first wallpaper 110.

It may be understood that scaling up the second wallpaper 108 is a manner to adjust the second wallpaper 108. In other embodiments, the second wallpaper 108 may be adjusted in such a way as to scale down the second wallpaper 108, move a display area of the second wallpaper 108, or blur the second wallpaper 108 (this function can be achieved by clicking a blur button on the wallpaper preview interface 106), and the like. This is not limited herein.

Similarly, moving the display area of the first wallpaper 110 is alternatively a manner to adjust the first wallpaper 110. In other embodiments, the first wallpaper 110 may be adjusted in such a way as to scale down the first wallpaper 110, scale up the display area of the first wallpaper 110, or blur the first wallpaper 110 (this function can be achieved by clicking a blur button on the wallpaper preview interface 106), and the like. This is not limited herein.

In other words, the electronic device may adjust a size or display area of the first wallpaper in response to a user operation. The electronic device may adjust a size or display area of the second wallpaper in response to a user operation to meet a browsing requirement of the user.

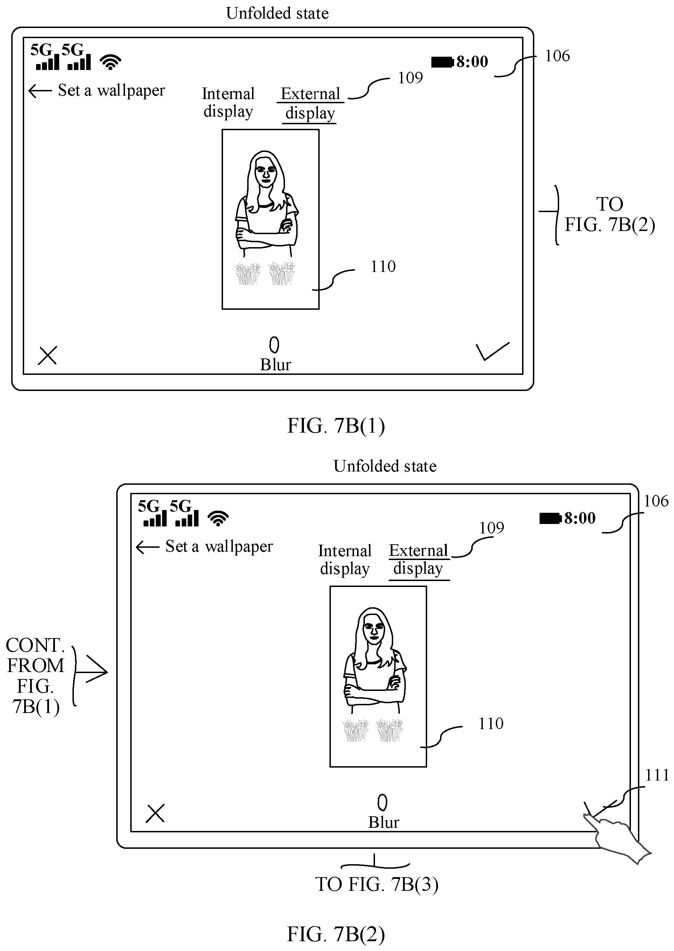

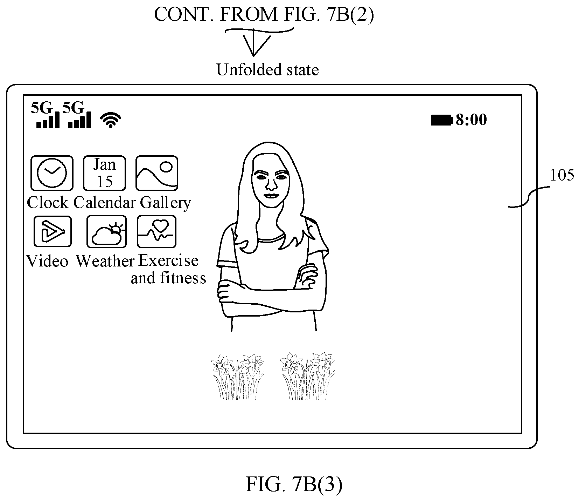

In this way, as shown in FIG. 7B(1), the electronic device may set the first wallpaper 110 on a desktop of the external display and set the second wallpaper 108 on a desktop of the internal display in response to the user's click operation on the first control 111 on the wallpaper preview interface 106 (that is, a confirmation operation on an adjusted first wallpaper 110 and an adjusted second wallpaper 108).

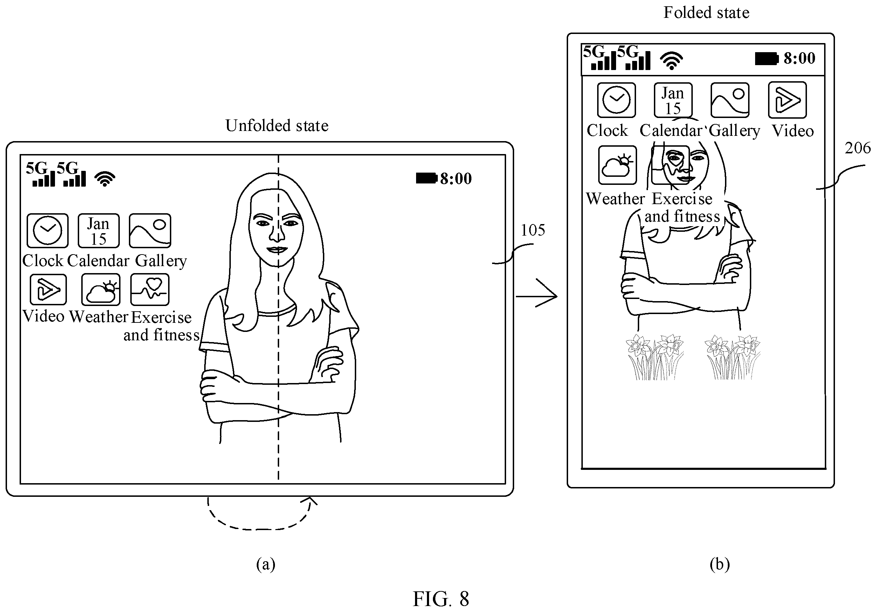

As shown in FIG. 7B(3), when the electronic device displays a desktop 105 on the internal display, the desktop 105 includes the adjusted first wallpaper 110. As shown in (a) and (b) in FIG. 8, when the electronic device is folded, the internal display of the electronic device can be folded and hidden, and the external display of the electronic device displays the desktop 206. The desktop 206 includes the adjusted second wallpaper.

In this way, the user can adjust the first wallpaper 110 and the second wallpaper 108 displayed on the wallpaper preview interface 106 by the electronic device, so that the adjusted first wallpaper 110 displayed on the desktop of the external display is more in line with the user's aesthetic requirements, and the adjusted second wallpaper 108 displayed on the desktop of the internal display is also more in line with the user's aesthetic requirements.

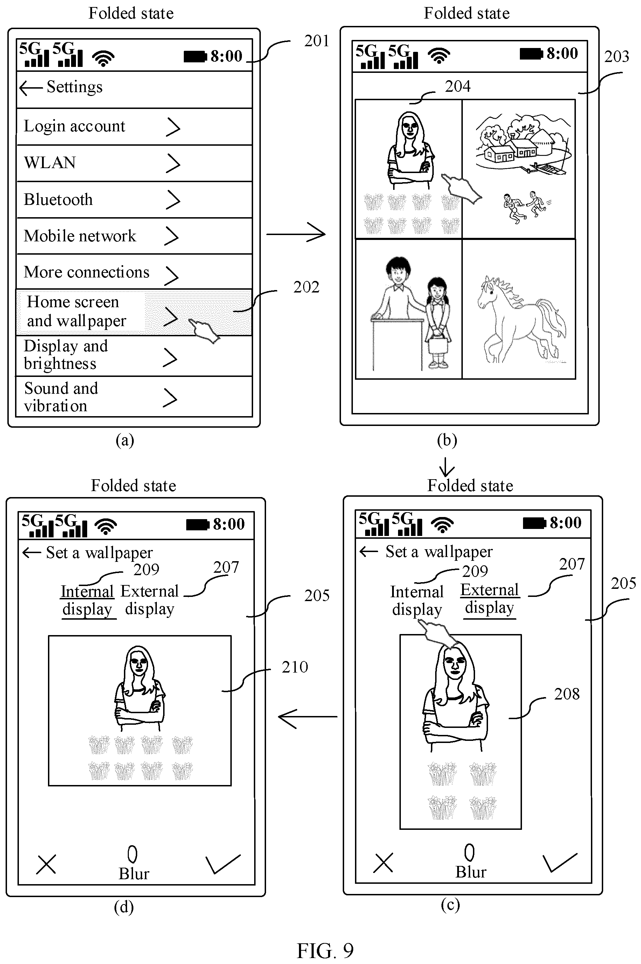

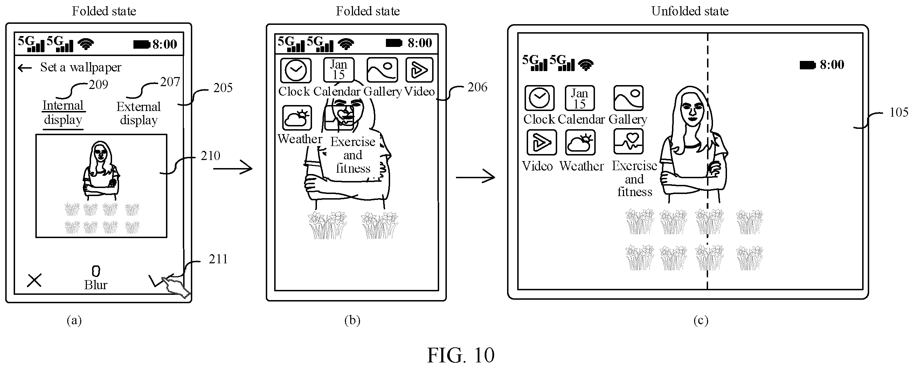

In addition, in the above embodiment, the first wallpaper 110 of the external display and the second wallpaper 108 of the internal display are set when the internal display of the electronic device responds to the user operation. How the external display of the electronic device sets the first wallpaper 110 of the external display and the second wallpaper 108 of the internal display in response to the user operation is explained below with reference to FIG. 9 and FIG. 10.

For example, as shown in (a) in FIG. 9, the electronic device displays a function setting interface 201 on the external display, and the function setting interface 201 includes a desktop and wallpaper option 202. The electronic device may display an image selection interface 203 (namely, a first interface) in response to a user's click operation on the desktop and wallpaper option 202. The image selection interface 203 includes a plurality of images.

As shown in (a) and (b) in FIG. 9, the electronic device may crop an image 204 based on a size of the external display of the electronic device in response to a user's click operation on the image 204 (namely, the first image) in the plurality of images. Further, the electronic device obtains a first wallpaper that matches the external display (namely, a first display) of the electronic device, and crops the image 204 based on a size of the internal display of the electronic device, to obtain a second wallpaper that matches the internal display (namely, a second display) of the electronic device. It may be understood that, because both the first wallpaper and the second wallpaper are generated based on the image 204 selected by the user, deformation of the first wallpaper and the second wallpaper due to a plurality of stretches is not caused.

As shown in (c) in FIG. 9, the electronic device displays a wallpaper preview interface 205 (namely, a second interface) on the external display, and the wallpaper preview interface 205 includes an external screen option 207 (namely, a first option). When the external screen option 207 is selected, the wallpaper preview interface 205 displays a first wallpaper 208. In this way, the user can preview the first wallpaper 208 on the wallpaper preview interface 205. It may be understood that, when the wallpaper preview interface 205 is displayed on the external display, the user may pay more attention to the first wallpaper 208 that matches the external display. Therefore, the electronic device preferentially displays the first wallpaper 208, which is more in line with a browsing requirement of the user.

It should be noted that, the external screen option 107 may be selected when triggered by the user, or the external screen option 107 may be selected by default when the wallpaper preview interface 205 is displayed on the external display of the electronic device. This is not limited herein.

It should be noted that, when the wallpaper preview interface is set and displayed based on the external display, the external screen option is selected by default. In other scenarios, when the wallpaper preview interface is set and displayed based on the internal display, the internal screen option is selected by default.

In addition, as shown in (a) and (b) in FIG. 10, the electronic device may alternatively display the second wallpaper 210 on the wallpaper preview interface 205 in response to a user's click operation (namely, a fourth operation) on an internal screen option 209 (namely, a second option). In this way, the user can preview the second wallpaper 210 on the wallpaper preview interface 205. It can be learned that both the first wallpaper 208 and the second wallpaper 210 can be displayed on the wallpaper preview interface 205.

In other words, the electronic device displays one of the first wallpaper and the second wallpaper on the wallpaper preview interface 106. In response to the third operation performed by the user, the electronic device updates to display the other one of the first wallpaper and the second wallpaper on the wallpaper preview interface 106.

Similar to the embodiment corresponding to FIG. 7A(1), FIG. 7A(2), FIG. 7A(3), and FIG. 7A(4), the user may alternatively adjust sizes and display areas of the first wallpaper 208 and the second wallpaper 210 according to a personal requirement, which is not described herein.

Further, as shown in (a) in FIG. 10, the wallpaper preview interface 106 further includes a first control 211, and first control 211 is used to indicate to set a wallpaper. As shown in (a) in FIG. 10, the electronic device may alternatively set the first wallpaper 208 on a desktop 206 of the external display and set the second wallpaper 210 on a desktop 105 of the internal display in response to a user's click operation on the first control 211 (that is, a confirmation operation, namely, a second operation, on the first wallpaper 208 and the second wallpaper 210).

As shown in (b) in FIG. 10, when the electronic device displays a desktop 206 of the external display, the desktop 206 includes the first wallpaper. As shown in (b) and (c) in FIG. 10, when the electronic device is unfolded, the internal display of the electronic device displays the desktop 105. The desktop 105 includes the second wallpaper.

Similarly, in the wallpaper setting method provided in the embodiments corresponding to FIG. 9 and FIG. 10, after the image 204 is selected, the first wallpaper 208 that matches the external display and the second wallpaper 210 that matches the internal display may be displayed on the wallpaper preview interface 205 of the external display. In this way, the user can view the first wallpaper 208 and the second wallpaper 210 on a same interface. In addition, the user can set the first wallpaper 208 on the desktop 206 of the external display and set the second wallpaper 210 on the desktop 105 of the internal display only by inputting the confirmation operation on the first wallpaper 208 and the second wallpaper 210 on the wallpaper preview interface 205. That is, the user can set the first wallpaper 208 of the external display and the second wallpaper 210 of the internal display through one trigger, which is convenient and quick to operate and has high efficiency.

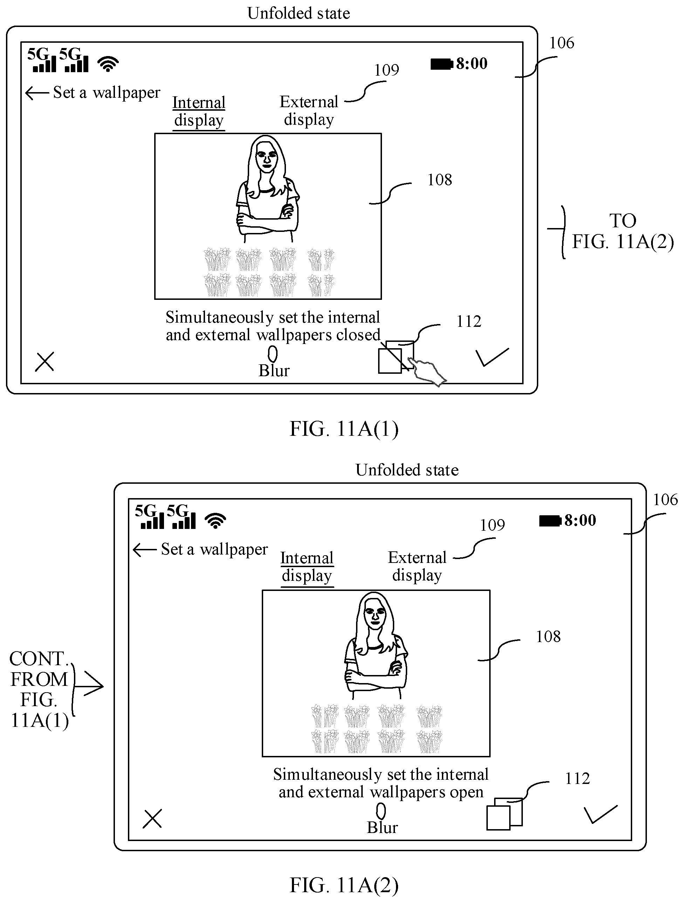

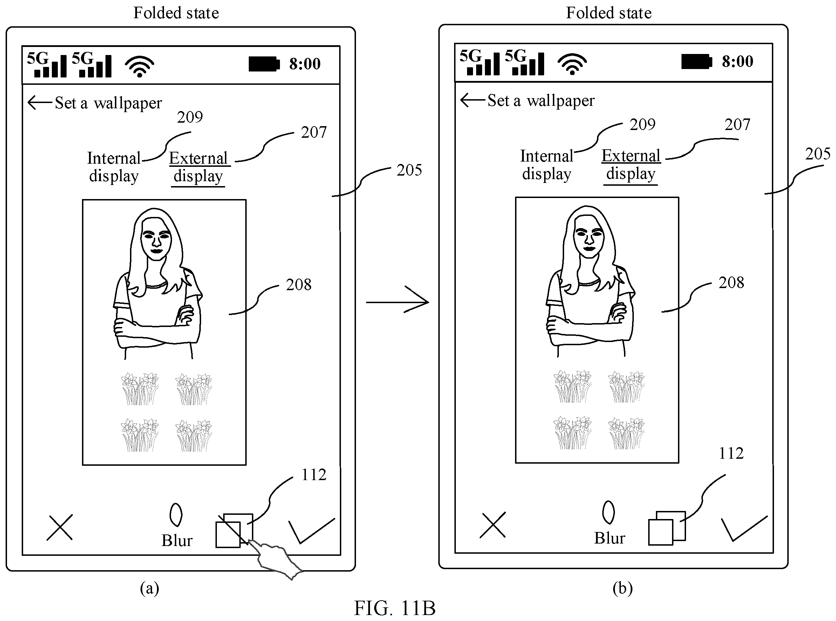

It should be noted that, in the above embodiments corresponding to FIG. 4A, FIG. 4B, and FIG. 4C, FIG. 5, FIG. 9, and FIG. 10, that a function of setting the first wallpaper of the external display and the second wallpaper of the internal display based on the same image is enabled by the electronic device by default is used as an example for description. Four different cases in which the electronic device may alternatively enable the function of setting the first wallpaper of the external display and the second wallpaper of the internal display based on the same image in response to the user operation is explained below with reference to FIG. 11A(1) and FIG. 11A(2), FIG. 11B, FIG. 12A, FIG. 12B, and FIG. 12C, and FIG. 13.

The first case: On the basis of the embodiment corresponding to FIG. 4A, FIG. 4B, and FIG. 4C, as shown in FIG. 11A(1), the wallpaper preview interface 106 displayed by the electronic device further includes a second control 112, and the second control 112 is used to indicate to enable the function of setting the first wallpaper of the external display and the second wallpaper of the internal display based on the same image. The second control 112 may also be referred to as a wallpaper synchronization control. The second control 112 is penetrated with a slash line and is used to indicate a function of setting the first wallpaper of the external display and the second wallpaper of the internal display in a disabled state based on the same image. The wallpaper preview interface 106 includes prompt information "Simultaneously set the internal and external screen wallpaper closed".

The electronic device may enable the function of setting the first wallpaper of the external display and the second wallpaper of the internal display based on the same image in response to a user's click operation on the second control 112. At this time, as shown in FIG. 11A(2), the slash line penetrating the second control 112 disappears to indicate that the function of setting the first wallpaper of the external display and the second wallpaper of the internal display based on the same image is enabled. Further, the electronic device may include the prompt information "Simultaneously set the internal and external screen wallpaper open" on the wallpaper preview interface 106. Further, the electronic device may continue to perform the functions of the embodiments corresponding to FIG. 5 and FIG. 6. In this way, the electronic device can determine whether to enable the function of setting the first wallpaper of the first display and the second wallpaper of the second display based on the same image and the user's requirement.

In addition, similarly, on the basis of the embodiment corresponding to FIG. 9, as shown in (a) in FIG. 11B, the wallpaper preview interface 205 displayed by the electronic device may alternatively include a second control 112, and the second control 112 is used to indicate to enable on the function of setting the first wallpaper of the external display and the second wallpaper of the internal display based on the same image. The second control 112 is penetrated with a slash line and is used to indicate a function of setting the first wallpaper of the external display and the second wallpaper of the internal display in a disabled state based on the same image. The wallpaper preview interface 205 includes the prompt information "Simultaneously set the internal and external screen wallpaper closed". It should be noted that, as shown in (a) and (b) in FIG. 11B, the steps performed by the electronic device in response to the user's click operation on the second control 112 are the same in principle as the steps in FIG. 11 in which the electronic device responds to the user's click operation on the second control 112, which is not be described herein. In this way, the electronic device can determine whether to enable the function of setting the first wallpaper of the first display and the second wallpaper of the second display based on the same image and the user's requirement.

The second case: Similarly, on the basis of the embodiment corresponding to FIG. 9, the wallpaper preview interface 205 displayed by the electronic device may alternatively include a second control 112, and the second control 112 is used to indicate to enable the function of setting the first wallpaper of the external display and the second wallpaper of the internal display based on the same image. The wallpaper preview interface 105 includes the prompt information "Simultaneously set the internal and external screen wallpaper closed" (not shown in the figure). The electronic device may enable the function of setting the first wallpaper of the external display and the second wallpaper of the internal display based on the same image in response to a user's click operation on the second control 112 (not shown in the figure). Further, the electronic device may display the prompt information "Simultaneously set the internal and external screen wallpaper open" on the wallpaper preview interface 205.

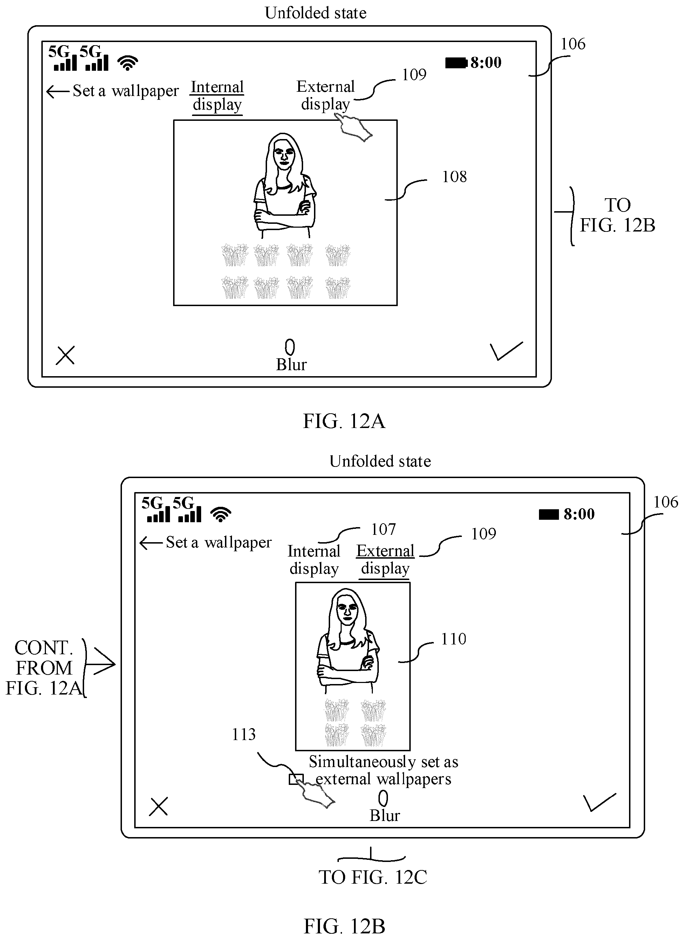

The third case: On the basis of the embodiment corresponding to FIG. 4A, FIG. 4B, and FIG. 4C, as shown in FIG. 12A and FIG. 12B, the electronic device displays the first wallpaper 110 on the wallpaper preview interface 106 when in response to a user's click operation (namely, a fifth operation) on an external screen option 109 (namely, a first option). At this time, the wallpaper preview interface 105 of the electronic device further displays a check box 113, and one side of the check box 113 is provided with prompt information (namely, second prompt information) for indicating to enable the function of setting the first wallpaper of the external display and the second wallpaper of the internal display based on the same image. For example, the prompt information may be text information of "Simultaneously set as the external wallpaper ". In other words, when the internal display of the electronic device displays the first wallpaper 110 that matches the external display, prompt information for indicating to enable the function of setting the first wallpaper of the external display and the second wallpaper 108 of the internal display based on the same image is displayed.

It may be understood that the second prompt information is used to indicate that the first wallpaper 110 is set on the external display. In this way, when the electronic device displays the first wallpaper 110 on the wallpaper preview interface 106 and receives a confirmation operation on the second prompt information, the second wallpaper 110 is set as a wallpaper of the internal display and the first wallpaper 110 is set as a wallpaper of the external display in response to the second operation on the first control, which is more in line with the user's demand for wallpaper setting.

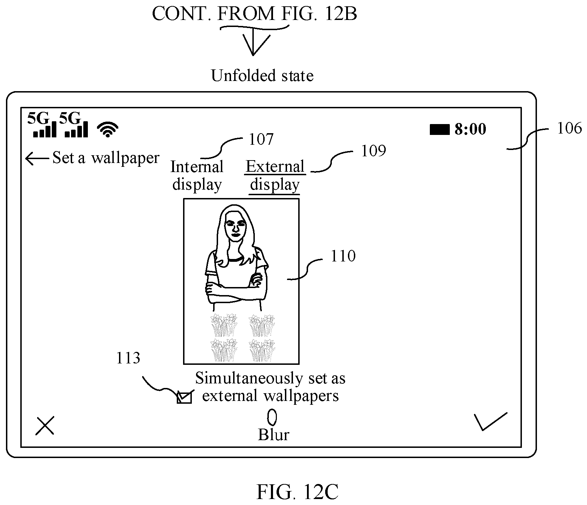

In addition, as shown in FIG. 12B and FIG. 12C, the electronic device may enable the function of setting the first wallpaper of the external display and the second wallpaper of the internal display based on the same image in response to a user's checking operation on the check box 113 (namely, a confirmation operation on the first prompt information). Further, the electronic device may continue to perform the function of the embodiment corresponding to FIG. 5.

Alternatively, the above check box and prompt information may alternatively be displayed when the wallpaper preview interface is opened. This is not limited herein.

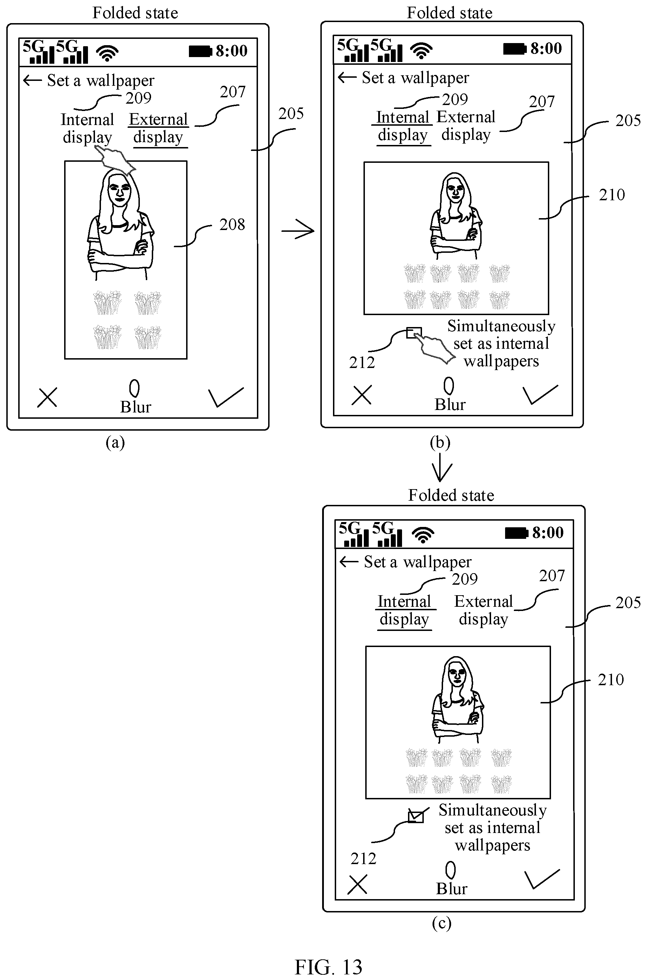

The fourth case: Similarly, on the basis of the embodiment corresponding to FIG. 9, as shown in (a) and (b) in FIG. 13, the electronic device displays the second wallpaper 210 on the wallpaper preview interface 205 when in response to a user's click operation on an internal screen option 209. At this time, the wallpaper preview interface 205 of the electronic device further displays a check box 113, and one side of the check box 113 is provided with prompt information (namely, first prompt information) for indicating to enable the function of setting the first wallpaper of the external display and the second wallpaper of the internal display based on the same image. For example, the prompt information may be text information of "Simultaneously set as the internal screen wallpaper ".

It may be understood that the first prompt information is used to indicate that the second wallpaper 210 is set on the second display. In this way, when the electronic device displays the second wallpaper 210 on the second interface and receives a confirmation operation on the second prompt information, the second wallpaper 210 is set as a wallpaper of the internal display and the first wallpaper 208 is set as a wallpaper of the external display in response to the second operation on the first control, which is more in line with the user's demand for wallpaper setting.

In addition, as shown in (c) in FIG. 13, the electronic device may enable the function of setting the first wallpaper of the external display and the second wallpaper of the internal display based on the same image in response to a user's checking operation on the check box 113 (namely, a confirmation operation on the second prompt information). Further, the electronic device may continue to perform the function of the embodiment corresponding to FIG. 10.

Alternatively, the above check box and prompt information may alternatively be displayed when the wallpaper preview interface is opened. This is not limited herein.

In addition, when the function of setting the first wallpaper of the external display and the second wallpaper of the internal display based on the same image is in a disabled state, the electronic device may alternatively set wallpapers obtained based on different images on the external display and the internal display in response to the user operation. This implements functional diversification. For example, on the basis of the embodiment corresponding to FIG. 11B, the electronic device may display an image selection interface 203 (namely, the first interface) in response to a long press operation on the first wallpaper 208. The image selection interface 203 includes a plurality of images. The electronic device may generate a third wallpaper (not shown in the figure) in response to a user's selection operation on another image. Further, the electronic device displays the third wallpaper (not shown in the figure) on the wallpaper preview interface 205. In this way, the electronic device may set the third wallpaper on the external display.

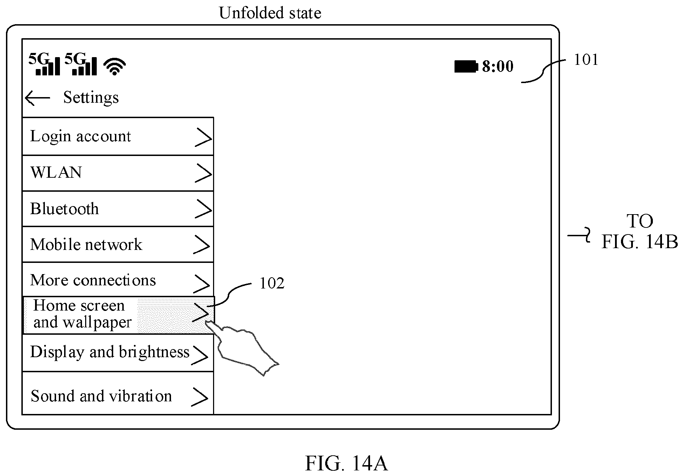

In the above embodiments, an example in which when the wallpaper preview interface of the electronic device does not display the first wallpaper that matches the external display and the second wallpaper that matches the internal display simultaneously, how the first wallpaper is set on a desktop of the external display and the second wallpaper is set on a desktop of the internal display of the electronic device used for description. Next, two cases are explained with reference to FIG. 14A to FIG. 20 in which when the wallpaper preview interface of the electronic device displays the first wallpaper that matches the external display and the second wallpaper that matches the internal display at the same time, how the first wallpaper is set on a desktop of the external display and the second wallpaper is set on a desktop of the internal display of the electronic device.

The first case: when a "Setting icon" of the desktop of the internal display of the electronic device is triggered by the user, as shown in FIG. 14A, the internal display of the electronic device displays a function setting interface 101, the function setting interface 101 includes an option list, and a desktop and wallpaper option 102 in the option list. The electronic device displays a plurality of images on the function setting interface 101 in response to a user's click operation on the desktop and wallpaper option 102.

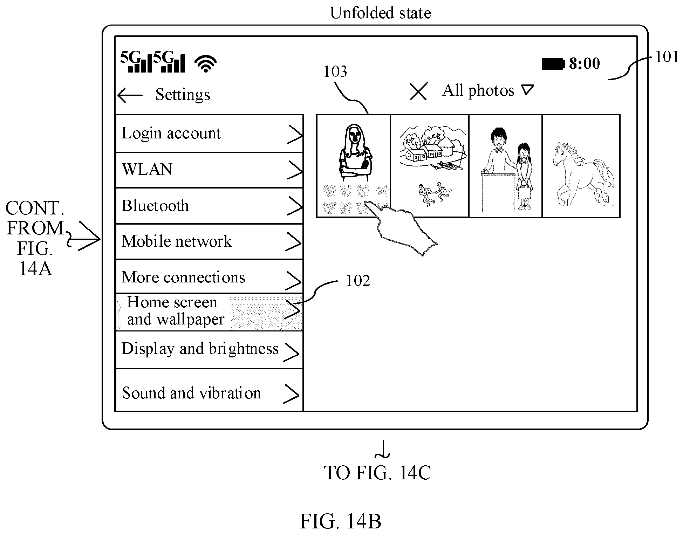

As shown in FIG. 14B, the electronic device may crop the image 103 based on a size of the external display of the electronic device in response to a user's click operation on the image 103 in the plurality of images. Further, the electronic device obtains a first wallpaper that matches the external display of the electronic device, and crops the image 103 based on a size of the internal display of the electronic device, to obtain a second wallpaper that matches the internal display of the electronic device. It may be understood that, because both the first wallpaper and the second wallpaper are generated based on the image 103 selected by the user, deformation of the first wallpaper and the second wallpaper due to a plurality of stretches is not caused.

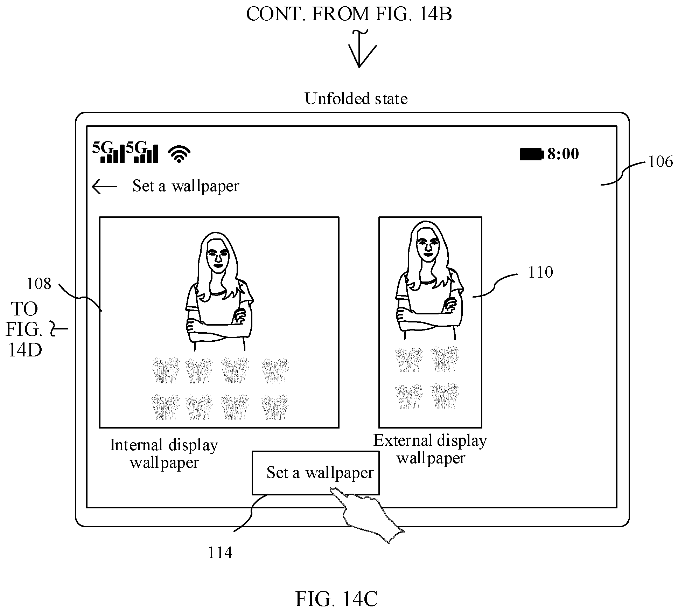

As shown in FIG. 14C, the internal display of the electronic device displays a wallpaper preview interface 106, the wallpaper preview interface 106 includes the first wallpaper 110 and the second wallpaper 108, and the first wallpaper 110 and the second wallpaper 108 are arranged at intervals. It can be seen that the first wallpaper 110 and the second wallpaper 108 can be simultaneously displayed on the wallpaper preview interface 106. Therefore, the user can browse the first wallpaper 110 and the second wallpaper 108 on the wallpaper preview interface 106. It can be seen that, the first wallpaper 110 and the second wallpaper 108 are displayed by the electronic device on the wallpaper preview interface 106 at the same time, and the first wallpaper 110 and the second wallpaper 108 does not overlap. In this way, the user can browse the first wallpaper 110 and the second wallpaper 108 on the wallpaper preview interface 106 at the same time, which is convenient and quick.

Similar to the embodiment corresponding to FIG. 7A(1), FIG. 7A(2), FIG. 7A(3), and FIG. 7A(4), the user can also adjust sizes and display areas of the first wallpaper 110 and the second wallpaper 108 according to a personal need, which is not described herein.

In addition, the wallpaper preview interface 106 further includes a first control 114, the first control 114 is identified with a text message "Set a wallpaper", and the first control 114 is used for setting a wallpaper. As shown in FIG. 14C, the electronic device may set the second wallpaper 108 on the desktop of the internal display and the first wallpaper 110 on the desktop of the external display in response to a user click operation on the first control 114.

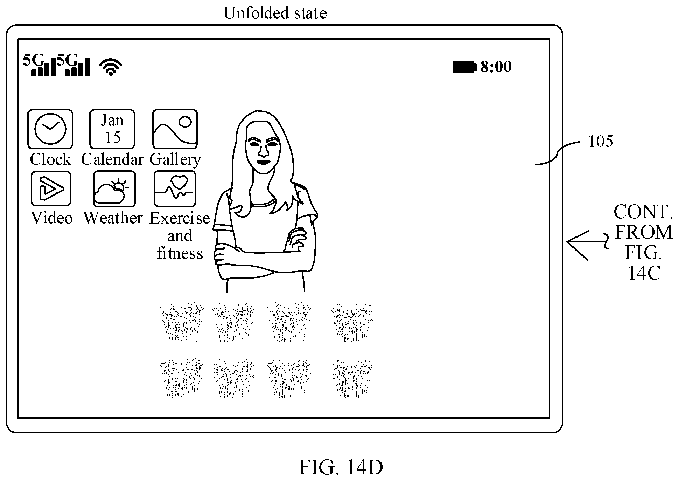

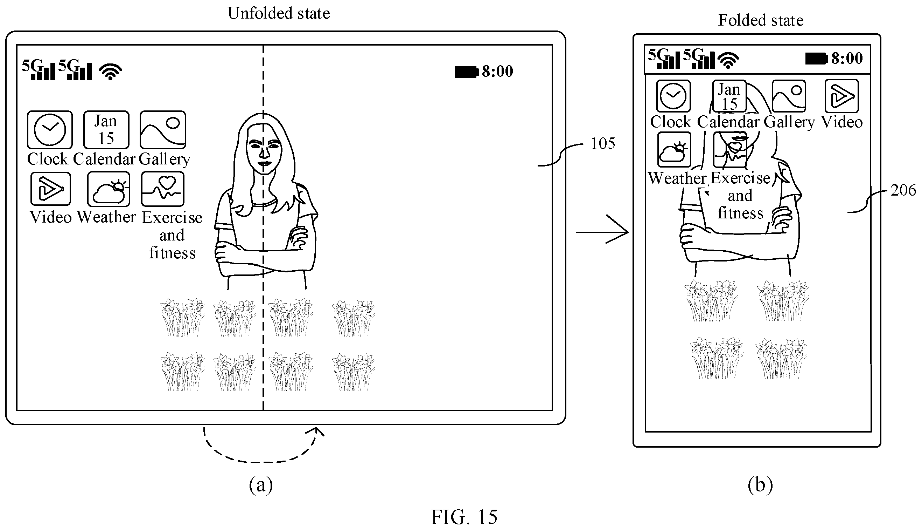

As shown in FIG. 14D, when the electronic device displays a desktop 105 on the internal display, the desktop 105 includes the first wallpaper. As shown in (a) and (b) in FIG. 15, when the electronic device is folded, the external display of the electronic device displays a desktop 206. The desktop 206 includes the second wallpaper.

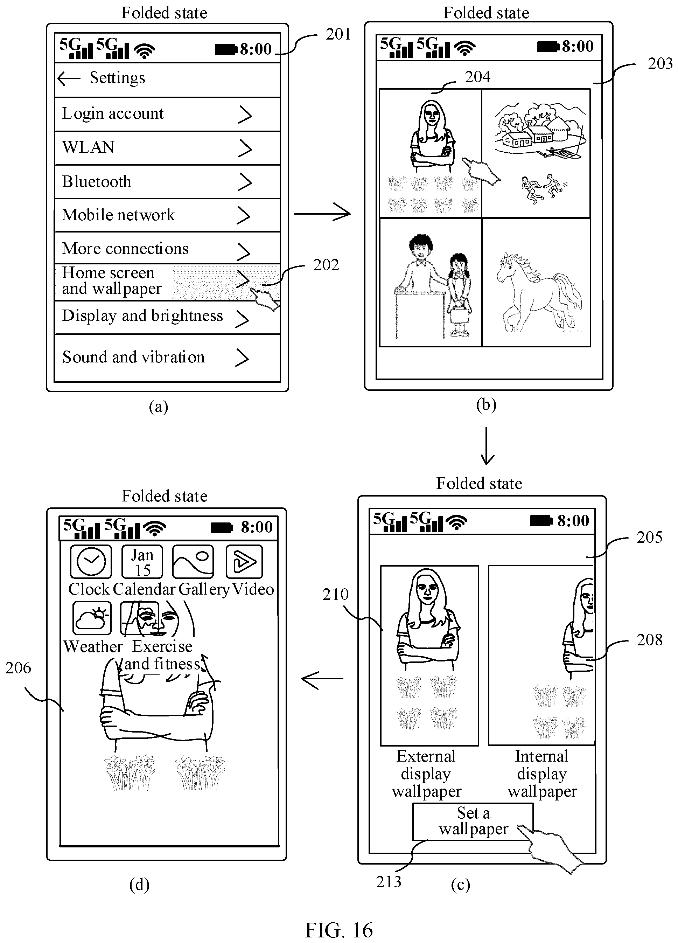

The second case: As shown in (a) in FIG. 16, the electronic device displays a function setting interface 201 on the external display, and the function setting interface 201 includes a desktop and wallpaper option 202. As shown in (a) and (b) in FIG. 16, the electronic device may display an image selection interface 203 (namely, a first interface) in response to a user's click operation on the desktop and wallpaper option 202. The image selection interface 203 includes a plurality of images.

As shown in (b) in FIG. 16, the electronic device may crop the image 204 based on a size of the external display of the electronic device in response to a user's click operation on the image 204 in the plurality of images. Further, the electronic device obtains a first wallpaper that matches the external display of the electronic device, and crops the image 204 based on a size of the internal display of the electronic device, to obtain a second wallpaper that matches the internal display of the electronic device. It may be understood that, because both the first wallpaper and the second wallpaper are generated based on the image 204 selected by the user, deformation of the first wallpaper and the second wallpaper due to a plurality of stretches is not caused.

As shown in (c) in FIG. 16, the electronic device displays a wallpaper preview interface 205, the wallpaper preview interface 205 includes the first wallpaper 210 and the second wallpaper 208, and the first wallpaper 110 and the second wallpaper 108 are arranged at intervals. In this way, the user can preview the first wallpaper 210 on the wallpaper preview interface 205. It can be seen that the first wallpaper 210 and the second wallpaper 208 can be simultaneously displayed on the wallpaper preview interface 205. The first wallpaper 210 may move a display position of the first wallpaper 210 in response to a user's moving operation for the user to browse different display positions of the first wallpaper 210. Similarly, the second wallpaper 108 may move a display position of the second wallpaper 108 in response to a user's moving operation for the user to browse different display positions of the second wallpaper 108.

Further, as shown in (c) in FIG. 16, the wallpaper preview interface 106 further includes a first control 213, the first control 213 is identified with a text message "Set a wallpaper", and the first control 213 is used for setting a wallpaper. As shown in (c) in FIG. 16, the electronic device may alternatively set the first wallpaper 208 on a desktop 205 of the external display and the second wallpaper 210 on a desktop of the internal display 106 in response to a user's click operation on the first control 213 (that is, a confirmation operation on the first wallpaper 208 and the second wallpaper 210).

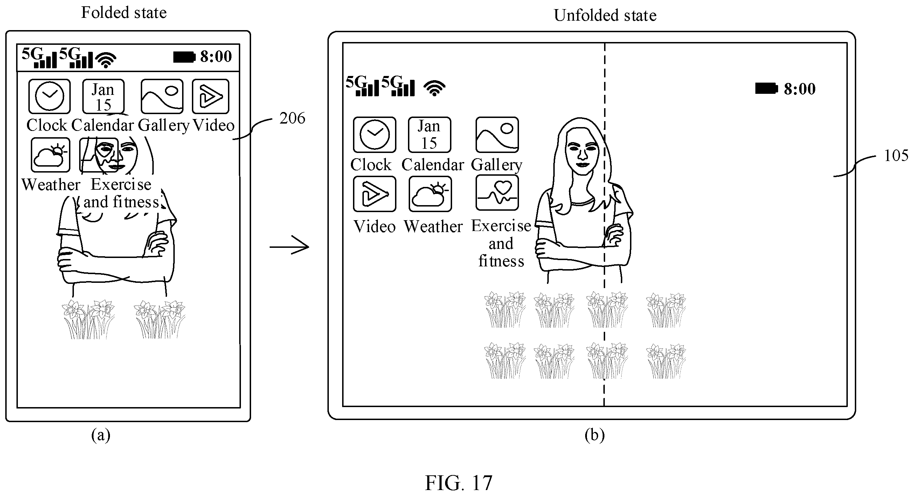

As shown in (d) in FIG. 16, when the electronic device displays a desktop 206 on the external display, the desktop 206 includes the first wallpaper. As shown in (a) and (b) in FIG. 17, when the electronic device is unfolded, the internal display of the electronic device displays the desktop 105. The desktop 105 includes the second wallpaper.

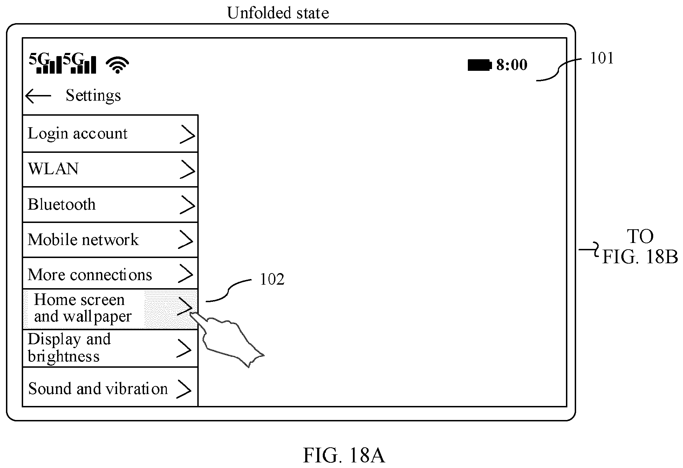

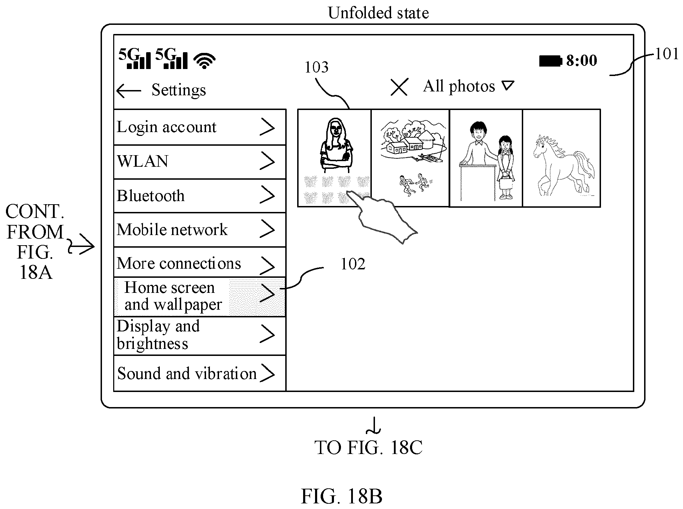

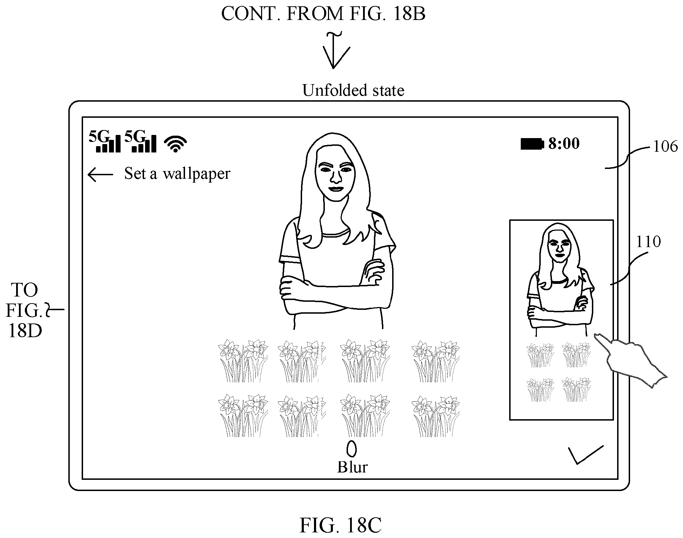

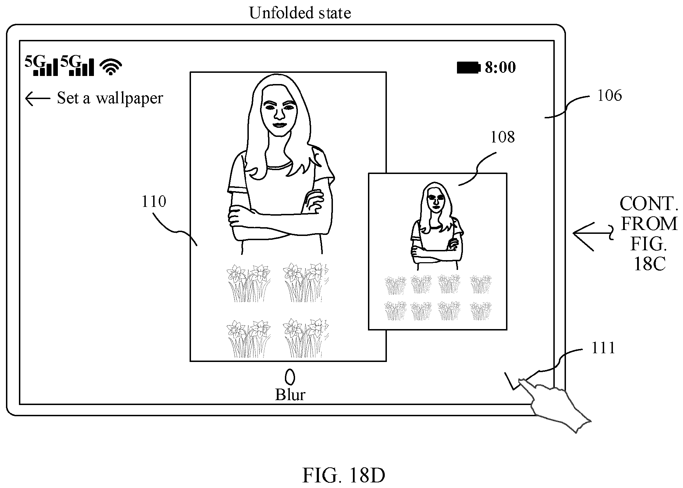

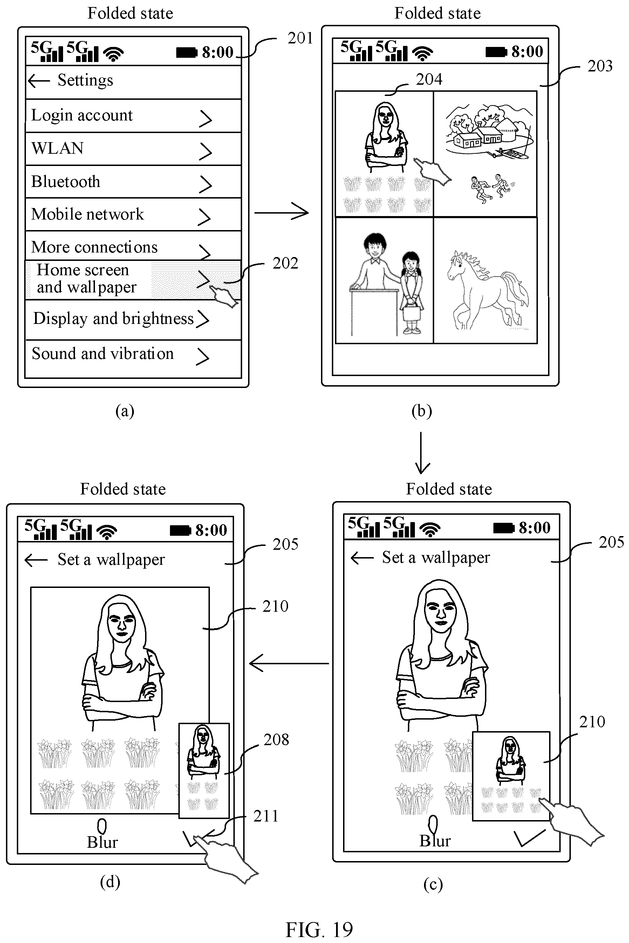

It should be noted that, the embodiment corresponding to FIG. 14A, FIG. 14B, FIG. 14C, and FIG. 14D and FIG. 16 respectively show how the electronic device displays the first wallpaper and the second wallpaper simultaneously when there is no inclusion relationship between an area occupied by the first wallpaper and an area occupied by the second wallpaper. Hereinafter two cases explain how the electronic device displays the first wallpaper and the second wallpaper simultaneously when there is an inclusion relationship between the area occupied by the first wallpaper and the area occupied by the second wallpaper with reference to FIG. 18A, FIG. 18B, FIG. 18C, and FIG. 18D and FIG. 19.

The first case: when a "Setting icon" of the desktop of the internal display of the electronic device is triggered by the user, as shown in FIG. 18A, the internal display of the electronic device displays a function setting interface 101, the function setting interface 101 includes an option list, and a desktop and wallpaper option 102 in the option list. As shown in FIG. 18A and FIG. 18B, the electronic device displays a plurality of images on the function setting interface 101 in response to a user's click operation on the desktop and wallpaper option 102.

As shown in FIG. 18B, the electronic device may crop the image 103 based on a size of the external display of the electronic device in response to a user's click operation on the image 103 in the plurality of images. Further, the electronic device obtains a first wallpaper that matches the external display of the electronic device, and crops the image 103 based on a size of the internal display of the electronic device, to obtain a second wallpaper that matches the internal display of the electronic device. It may be understood that, because both the first wallpaper and the second wallpaper are generated based on the image 103 selected by the user, deformation of the first wallpaper and the second wallpaper due to a plurality of stretches is not caused.

As shown in FIG. 18C, the electronic device displays a wallpaper preview interface 106, the wallpaper preview interface 106 includes a first window, and an area of the first window is smaller than that of the wallpaper preview interface 106. The second wallpaper is on the wallpaper preview interface 106, so that the user can more clearly browse the second wallpaper. In addition, the wallpaper preview interface 106 further includes the first wallpaper 110 within the first window. It can be seen that the first wallpaper 110 and the second wallpaper 108 can be simultaneously displayed on the wallpaper preview interface 106. Therefore, the user can browse the second wallpaper 108 and the first wallpaper 110 on the wallpaper preview interface 106. It can be seen that, the first wallpaper 110 and the second wallpaper 108 are displayed by the electronic device on the wallpaper preview interface 106 at the same time.

Similar to the embodiment corresponding to FIG. 7A(1), FIG. 7A(2), FIG. 7A(3), and FIG. 7A(4), the user can also adjust sizes and display areas of the first wallpaper 110 and the second wallpaper 108 according to a personal need, which is not described herein.

In addition, as shown in in FIG. 18C and FIG. 18D, the electronic device may alternatively switch a position relationship between the first wallpaper 110 and the second wallpaper 108 on the preview interface 106 in response to a user's click operation on the first wallpaper 110, so that the first wallpaper 110 is within the wallpaper preview interface 106 and the second wallpaper 108 is within the first window, so that the user can more clearly browse the first wallpaper 110. A size of the first window changes with a size of a wallpaper in the first window. Similarly, the first wallpaper 110 and the second wallpaper 108 can still be simultaneously displayed on the wallpaper preview interface 106. Therefore, the user can still browse the second wallpaper and the first wallpaper 110 on the wallpaper preview interface 106.

Further, as shown in FIG. 18D, the wallpaper preview interface 106 further includes a first control 111, and the first control 111 is used to indicate to set the wallpaper. The electronic device may alternatively set the first wallpaper 110 on a desktop of the external display and the second wallpaper 108 on a desktop of the internal display in response to a user's click operation (that is, a confirmation operation on the first wallpaper 110 and the second wallpaper 108) on the first control 111.

Similarly, as shown in (d) in FIG. 5, when the electronic device displays a desktop 105 on the internal display, the desktop 105 includes the first wallpaper. As shown in (a) and (b) in FIG. 6, when the electronic device displays that the desktop 105 of the internal display is folded, the internal display of the electronic device can be folded and hidden, and the external display of the electronic device displays the desktop 206. The desktop 206 includes the second wallpaper.

The second case: As shown in (a) in FIG. 19, the electronic device displays a function setting interface 201 on the external display, and the function setting interface 201 includes a desktop and wallpaper option 202. As shown in (a) and (b) in FIG. 19, the electronic device may display an image selection interface 203 (namely, a first interface) in response to a user's click operation on the desktop and wallpaper option 202. The image selection interface 203 includes a plurality of images.

As shown in (b) in FIG. 19, the electronic device may crop the image 204 based on a size of the external display of the electronic device in response to a user's click operation on the image 204 in the plurality of images. Further, the electronic device obtains a first wallpaper that matches the external display of the electronic device, and crops the image 204 based on a size of the internal display of the electronic device, to obtain a second wallpaper that matches the internal display of the electronic device. It may be understood that, because both the first wallpaper and the second wallpaper are generated based on the image 103 selected by the user, deformation of the first wallpaper and the second wallpaper due to a plurality of stretches is not caused.

As shown in (c) in FIG. 19, the electronic device displays a wallpaper preview interface 205, the wallpaper preview interface 205 includes a first window, and an area of the first window is smaller than that of the wallpaper preview interface 106. The second wallpaper is on the wallpaper preview interface 205, so that the user can more clearly browse the first wallpaper. In addition, the wallpaper preview interface 205 further includes a second wallpaper 210 located in an area occupied by the first wallpaper within the first window. It can be seen that the first wallpaper and the second wallpaper 210 can be simultaneously displayed on the wallpaper preview interface 205. Therefore, the user can browse the second wallpaper 210 and the first wallpaper on the wallpaper preview interface 205.

Similar to the embodiment corresponding to FIG. 7A(1), FIG. 7A(2), FIG. 7A(3), and FIG. 7A(4), the user can also adjust sizes and display areas of the first wallpaper and the second wallpaper 208 according to a personal need, which is not described herein.

In addition, as shown in (c) and (d) in FIG. 19, the electronic device may also cause the second wallpaper 210 to be located within the wallpaper preview interface 205 in response to a user's click operation on the second wallpaper 210, so that the user can more clearly browse the second wallpaper 210. In addition, the wallpaper preview interface 205 further includes the first wallpaper 208 within the first window. A size of the first window changes with a size of a wallpaper in the first window. Similarly, the second wallpaper 210 and the first wallpaper 208 can still be simultaneously displayed on the wallpaper preview interface 106. Therefore, the user can still browse the second wallpaper and the first wallpaper 208 on the wallpaper preview interface 205.

Further, as shown in (d) in FIG. 19, the wallpaper preview interface 205 further includes a first control 211, and the first control 211 is used to indicate to set a wallpaper. The electronic device may alternatively set the first wallpaper 208 on a desktop 206 of the external display and the second wallpaper 210 on a desktop of the internal display 205 in response to a user's click operation on the first control 211 (that is, a confirmation operation on the first wallpaper 208 and the second wallpaper 210).

Similarly, as shown in (b) in FIG. 10, when the electronic device displays a desktop 206 on the external display, the desktop 206 includes the first wallpaper. As shown in (b) and (c) in FIG. 10, when the electronic device is unfolded, the internal display of the electronic device displays the desktop 105. The desktop 105 includes the second wallpaper.

It should be noted that, in the above embodiments, an example in which the first wallpaper is set on the desktop of the external display of the electronic device, and the second wallpaper is set on the desktop of the internal display of the electronic device is used for description. It should be noted that, in other embodiments, the first wallpaper may alternatively be set on a screen locking interface of the external display of the electronic device, and the second wallpaper may alternatively be set on a screen locking interface of the internal display of the electronic device. This is not limited herein.

It should be noted that, the wallpaper preview interface in the above embodiments may further include a delete button. The electronic device may delete the first wallpaper and the second wallpaper on a wallpaper preview interface in response to a user's click operation on the delete button.

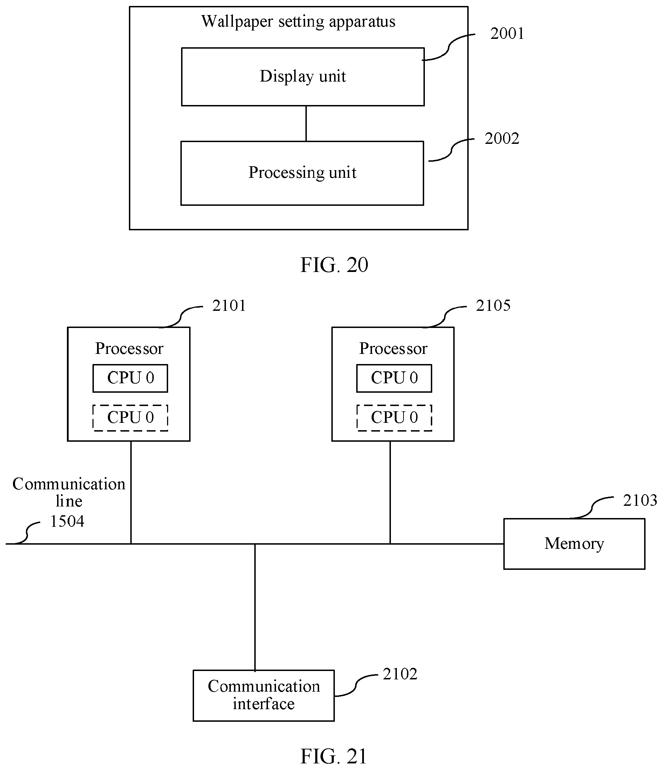

As shown in FIG. 20, this application provides a wallpaper setting device, applied to an electronic device, and the electronic device includes a first display and a second display. The apparatus provided in this application includes: a display unit 2001, configured to display a first interface, and the first interface includes a first image; a display unit 2001, further configured to: in response to a first operation on the first image, the electronic device displays a second interface, where the second interface includes a first wallpaper, a second wallpaper, and a first control, where the first wallpaper and the second wallpaper are different wallpapers generated based on the first image, the first wallpaper matches the first display, and the second wallpaper matches the second display; and a processing unit 2002, configured to: set the first wallpaper as a wallpaper of the first display and set the second wallpaper as a wallpaper of the second display in response to a second operation on the first control on the second interface.

In a possible implementation, the display unit 2001 is specifically configured to display one of the first wallpaper and the second wallpaper on the second interface; and update to display the other of the first wallpaper and the second wallpaper on the second interface in response to a third operation of a user.

In a possible implementation, the display unit 2001 is specifically configured to display the first wallpaper on the second interface, and be updated to display the second wallpaper in response to a fourth operation of the user on the second interface.

In a possible implementation, the second interface includes a first option and a second option, where the first option is used to indicate to display the first wallpaper, the second option is used to indicate to display the second wallpaper, the first option is selected by default, and the fourth operation is a selected operation for the second option.

In a possible implementation, the display unit 2001 is specifically used to display first prompt information on the second interface, and the first prompt information is used to indicate that the second wallpaper is set on the second display. The processing unit 2002 is configured to: set the first wallpaper as a wallpaper of the first display and set the second wallpaper as a wallpaper of the second display in response to a second operation on the first control on the second interface.

In a possible implementation, the second interface is displayed on the second display and the display unit 2001 is specifically used to display the second wallpaper on the second interface; and in response to a fifth operation of the user, be updated to display the first wallpaper on the second interface.

In a possible implementation, the second interface includes a first option and a second option, where the first option is used to indicate to display the first wallpaper, the second option is used to indicate to display the second wallpaper, the second option is selected by default, and the fifth operation is a selected operation for the first option.

In a possible implementation, after the electronic device is updated to display the first wallpaper on the second interface in response to a fifth operation of the user, the method further includes:
The electronic device displays second prompt information on the second interface, and the second prompt information is used to indicate to set the first wallpaper on the first display. The processing unit 2002 is specifically configured to receive the confirmation operation on the second prompt information, set the first wallpaper as a wallpaper of the first display and set the second wallpaper as a wallpaper of the second display in response to a second operation on the first control on the second interface.

In a possible implementation, the first wallpaper and the second wallpaper are simultaneously displayed on the second interface by the display unit 2001.

In a possible implementation, the first wallpaper and the second wallpaper do not overlap.

In a possible implementation, a first window is displayed on the second interface. When the second interface is displayed on the first display, the first wallpaper is in the second interface and the second wallpaper is within the first window. When the second interface is displayed on the second display, the second wallpaper is within the second interface and the first wallpaper is within the first window.

In a possible implementation, before the first wallpaper is set as a wallpaper of the first display, the second wallpaper is set as a wallpaper of the second display, when the second interface is displayed on the first display, the display unit 2001 is further configured to display the first wallpaper in the first window and the second wallpaper on the second interface in response to a switching operation on the second interface. Alternatively, when the second interface is displayed on the second display, the display unit 2001 is further configured to: display the first wallpaper on the second interface and display the second wallpaper in the first window in response to the switching operation on the second interface.

In a possible implementation, in setting the first wallpaper as a wallpaper of the first display, the display unit 2001 is further configured to scale up the first wallpaper, scale down the first wallpaper, or adjust a display area of the first wallpaper in response to an adjustment operation on the first wallpaper; and/or the display unit 2001 is further configured to scale up the second wallpaper, scale down the second wallpaper, or adjust a display area of the second wallpaper in response to an adjustment operation on the second wallpaper.

In a possible implementation, the second interface includes a second control, and the second control is used to indicate to enable a function of setting the first wallpaper of the first display and the second wallpaper of the second display based on the same image. The processing unit 2002 is further configured to enable the function of setting the first wallpaper of the first display and the second wallpaper of the second display based on the same image in response to a triggering operation on the second control.

For example, FIG. 21 is a schematic diagram of a hardware structure of a terminal device according to an embodiment of this application. As shown in FIG. 21, the terminal device includes a processor 2101, a communication line 2104, and at least one communication interface (for example, a communication interface 2103 is used as an example for description in FIG. 21).

The processor 2101 may be a general-purpose central processing unit (central processing unit, CPU), a microprocessor, an application-specific integrated circuit (application-specific integrated circuit, ASIC), or one or more integrated circuits configured to control execution of a program in the solutions of this application.

The communication line 2104 may include a circuit configured to transmit information between the foregoing components.

The communication interface 2103 uses any apparatus of a transceiver type to communicate with another device or a communication network such as an Ethernet, wireless local area networks (wireless local area networks, WLAN), and the like.

Possibly, the terminal device may further include a memory 2102.

The memory 2102 may be a read-only memory (read-only memory, ROM), another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM) or a compact disc read-only memory (compact disc read-only memory, CD-ROM) or another compact disc storage, optical disc storage (including compressed optical discs, laser discs, optical discs, digital versatile optical discs, and Blu-ray discs), magnetic disk storage media, or another magnetic storage device, or any another medium that can be used to carry or store desired program code in the form of an instruction or a data structure and that can be accessed by a computer, but not limited thereto. The memory may exist independently, and is connected to the processor through the communication line 2104. The memory may alternatively be integrated with the processor.

The memory 2102 is configured to store computer executable instructions for performing the solutions of this application, and is controlled and executed by the processor 2101. The processor 2101 is configured to execute the computer executable instructions stored in the memory 2102 to implement the wallpaper setting method provided in embodiments of this application.

Possibly, the computer executable instructions in embodiments of this application may also be referred to as application code. This is not specifically limited in embodiments of this application.

During specific implementation, in an embodiment, the processor 2101 may include one or more CPUs, for example, a CPU0 and a CPU1 in FIG. 21.

During specific implementation, in an embodiment, the terminal device may include a plurality of processors, for example, a processor 2101 and a processor 2105 in FIG. 21. Each of these processors may be a single-CPU (single-CPU) processor, or may be a multi-CPU (multi-CPU) processor. The processor herein may be one or more devices or circuits, and/or a processing core configured to process data (for example, computer program instructions).

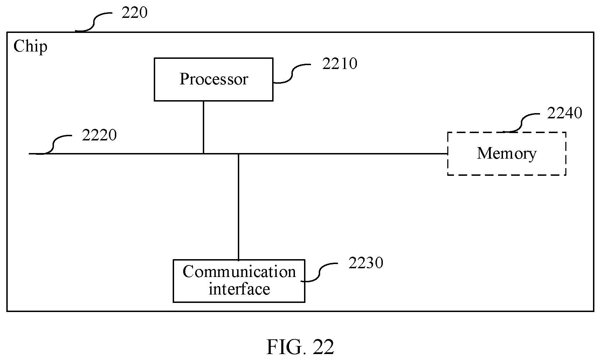

For example, FIG. 22 is a schematic diagram of a structure of a chip according to an embodiment of this application. A chip 220 includes one or more than two (including two) processors 2210 and a communication interface 2230.

In some implementations, the memory 2240 stores the following elements: an executable module, or a data structure, or a subset thereof, or an extension set thereof.

In embodiments of this application, the memory 2240 may include a read-only memory and a random access memory, and provides instructions and data to the processor 2210. A part of the memory 2240 may further include a non-volatile random access memory (non-volatile random access memory, NVRAM).

In embodiments of this application, the memory 2240, the communication interface 2230, and the memory 2240 are coupled together by a bus system 2220. In addition to a data bus, the bus system 2220 may further include a power bus, a control bus, a status signal bus, and the like. For ease of representation, all types of buses in FIG. 22 are marked as the bus system 2220.

The method described in embodiments of this application may be applied to the processor 2210 or implemented by the processor 2210. The processor 2210 may be an integrated circuit chip having a capability of processing a signal. In an implementation process, steps in the foregoing methods can be implemented by using a hardware integrated logical circuit in the processor 2210, or by using instructions in a form of software. The above processor 2210 may be a general-purpose processor (for example, a microprocessor or a conventional processor), a digital signal processing (digital signal processing, DSP), an application specific integrated circuit (application specific integrated circuit, ASIC), a field-programmable gate array (field-programmable gate array, FPGA), another programmable logic device, a discrete gate, a transistor logic device, or a discrete hardware component. The processor 2210 may implement or perform the methods, steps, and logical block diagrams disclosed in embodiments of this application.

The steps of the methods disclosed with reference to the embodiments of this application may be directly performed and completed by using a hardware decoding processor, or may be performed and completed by using a combination of hardware and software modules in the decoding processor. The software module may be located in a mature storage medium in the field such as a random access memory, a read-only memory, a programmable read-only memory, an electrically erasable programmable memory (electrically erasable programmable read only memory, EEPROM), or a register. The storage medium is located in the memory 2240, and the processor 2210 reads information in the memory 2240, and completes the steps in the foregoing methods in combination with hardware thereof.

In the foregoing embodiment, the instructions executed by the processor stored in the memory may be implemented in the form of a computer program product. The computer program product may be pre-written in the memory, or may be downloaded and installed in the memory in the form of software.

The computer program product includes one or more computer instructions. When the computer program instructions are loaded and executed on the computer, the procedure or functions according to the embodiments of this application are all or partially generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, including one or more usable media. The usable medium may include a magnetic medium (for example, a floppy disk, a hard disk, or a magnetic tape), an optical medium (for example, a digital versatile disc (digital versatile disc, DVD)), a semi-conductive medium (for example, a solid state disk (solid state disk, SSD)), or the like.

All or some of methods in the foregoing embodiments may be implemented by using software, hardware, firmware, or any combination thereof. The computer-readable medium may include a computer storage medium and a communication medium, and may further include any medium that can transmit a computer program from one place to another. The storage medium may be any target medium accessible to a computer.

In a possible design, the computer-readable storage medium may include a compact disc read-only memory (compact disc read-only memory, CD-ROM), a RAM, a ROM, an EEPROM, or another optical disc memory. The computer-readable medium may include a magnetic disk memory or another magnetic disk storage device. Any connection line may also be appropriately referred to as a computer readable medium. For example, if software is transmitted from a website, a server or another remote source by using a coaxial cable, an optical fiber cable, a twisted pair, a DSL or wireless technologies (such as infrared ray, radio, and microwave), the coaxial cable, optical fiber cable, twisted pair, DSL or wireless technologies such as infrared ray, radio, and microwave are included in the definition of the medium. A magnetic disk and an optical disc used herein include an optical disc (CD), a laser disc, an optical disc, a digital versatile disc (digital versatile disc, DVD), a floppy disk, and a blue ray disc, where the magnetic disk generally reproduces data in a magnetic manner, and the optical disc reproduces data optically by using laser.

## Claims

1. A wallpaper setting method, applied to an electronic device (100), wherein the electronic device (100) comprises a first display and a second display, and the method comprises:
displaying, by the electronic device (100), a first interface (203) on the first display, wherein the first interface comprises a thumbnail of a first image (204) and a thumbnail of a second image; and
displaying, by the electronic device (100), a second interface (205) on the first display in response to a first operation on the thumbnail of the first image (204), wherein the second interface (205) comprises:
a first part of the first image (204);
a second option (209), wherein when receiving a second operation on the second option (209), the electronic device (100) displays a second part of the first image (204) on the second interface (205) in response to the second operation, and the second part is different from the first part;
a first control (211), wherein when receiving a third operation on the first control (211), the electronic device (100) sets the first part of the first image (204) as a first wallpaper of the first display and sets the second part of the first image (204) as a second wallpaper of the second display in response to the third operation; and
a second control (212), the second control (212) is displayed in a first state, and the first state indicates to enable simultaneously setting the first wallpaper of the first display and the second wallpaper of the second display based on the first image (204).

2. The method according to claim 1, further comprising:
when receiving a fourth operation on the second control (112), displaying the second control (112) in a second state in response to the fourth operation; and
when the second control (112) is in the second state, setting wallpapers obtained based on different images on the first display and the second display in response to a user operation.

3. The method according to claim 1 or 2, wherein the second interface (205) further comprises first prompt information associated with the second control (112), and the first prompt information is used to indicate to set a wallpaper of the second display simultaneously.

4. The method according to claim 1 or 2, wherein the second interface (205) further comprises: a first option (207); and
when the second part of the first image (204) is displayed on the second interface (205), the electronic device (100) displays the first part of the first image (204) on the second interface (205) in response to an operation on the first option (207).

5. The method according to claim 1 or 2, wherein the method further comprises: when the second part of the first image (204) is displayed on the second interface (205), stopping displaying the first part of the first image (204) on the second interface (205).

6. The method according to claim 4, wherein the method further comprises:
displaying, by the electronic device (100), a third interface on the second display, wherein the third interface comprises the thumbnail of the first image (204) and the thumbnail of the second image; and
displaying, by the electronic device (100), a fourth interface on the second display in response to a sixth operation on the thumbnail of the first image (204), wherein the fourth interface comprises:
the second part of the first image (204);
the first option (207), wherein when receiving a seventh operation on the first option (207), the electronic device (100) displays the first part of the first image (204) on the fourth interface in response to the seventh operation;
- the second option (209), when the first part of the first image (204) is displayed on the fourth interface, the electronic device (100) displays the second part of the first image (204) on the fourth interface in response to an operation on the second option (209);
the first control (211), wherein when receiving an eighth operation on the first control (211), the electronic device (100) sets the second part of the first image (204) as the second wallpaper of the second display and sets the first part of the first image (204) as the first wallpaper of the first display in response to the eighth operation; and
the second control (112), the second control (112) is displayed in the first state, the first state indicates to enable simultaneously setting the first wallpaper of the first display and the second wallpaper of the second display simultaneously based on the first image (204).

7. The method according to claim 6, further comprising:
when receiving a ninth operation on the second control (112), displaying the second control (112) in the second state in response to the ninth operation; and
when the second control (112) is in the second state, setting wallpapers obtained based on different images on the first display and the second display in response to a user operation.

8. The method according to claim 6 or 7, wherein the fourth interface further comprises second prompt information associated with the second control (112), and the second prompt information is used to indicate to set a wallpaper of the first display simultaneously, and
when the first part of the first image (204) is displayed on the fourth interface, the second part of the first image (204) is stopped displaying on the fourth interface.

9. The method according to any one of claims 1 to 8, wherein a size of the first part of the first image (204) matches that of the first display, and a size of the second part of the first image (204) matches that of the second display;
wherein that a size of the first part matches that of the first display means: an aspect ratio of the first part is the same as an aspect ratio of the first display; and
that a size of the second part matches that of the second display means: an aspect ratio of the second part is the same as an aspect ratio of the second display.

10. The method according to any one of claims 1 to 8, wherein a part of image content of the second part is the same as a part of image content of the first part; or
image content of the second part is a part of image content of the first part.

11. The method according to any one of claims 1 to 8, wherein when the electronic device (100) displays a desktop or a lock screen interface on the first display, the electronic device (100) displays the first wallpaper on the desktop or the lock screen interface; or
when the electronic device (100) displays the desktop or the lock screen interface on the second display, the electronic device (100) displays the second wallpaper on the desktop or the lock screen interface.

12. The method according to claim 1 or 6, wherein the method further comprises:
when receiving an eleventh operation on the first part of the first image (204), displaying a third part of the first image (204) on the second interface (205) in response to the eleventh operation, wherein the eleventh operation is one operation or a combination of a plurality of the following operations: a zoom-in operation, a zoom-out operation, a movement operation, and a blur operation; and
when the electronic device (100) receives a twelfth operation on the first control, setting the third part of the first image (204) as a third wallpaper of the first display and setting the second part of the first image (204) as the second wallpaper of the second display in response to the twelfth operation.

13. The method according to claim 1 or 6, wherein the method further comprises:
when receiving a thirteenth operation on the second part of the first image (204), displaying a fourth part of the first image (204) on the second interface (205) in response to the thirteenth operation, wherein the thirteenth operation is one operation or a combination of a plurality of the following operations: a zoom-in operation, a zoom-out operation, a movement operation, and a blur operation; and
when the electronic device (100) receives a fourteenth operation on the first control, setting the first part of the first image (204) as the first wallpaper of the first display and setting the fourth part of the first image (204) as a fourth wallpaper of the second display in response to the fourteenth operation.

14. The method according to claim 1 or 6, wherein the first display is an external display, the second display is an internal display, and the internal display and the external display are respectively located on two opposite surfaces of the electronic device (100) ;
when the electronic device (100) displays a desktop (105) on the internal display, the desktop comprises the first wallpaper; and
when the electronic device (100) is folded, the internal display of the electronic device (100) can be folded and hidden, and the external display of the electronic device (100) displays the desktop, the desktop comprises the second wallpaper.

15. An electronic device (100), comprising:
a first display;
a second display;
one or more processors (110);
a memory (121);
a plurality of applications; and
one or more computer programs, wherein the one or more computer programs are stored in the memory (121), and the one or more computer programs comprise instructions, and when the instructions are executed by the electronic device (100), the electronic device (100) is enabled to perform the method according to any one of claims 1 to 14.

## Patentansprüche

1. Ein Verfahren zum Festlegen von Hintergrundbildern, angewendet auf ein elektronisches Gerät (100), wobei das elektronische Gerät (100) ein erstes Display und ein zweites Display umfasst, und das Verfahren Folgendes umfasst:
Anzeige einer ersten Oberfläche (203) auf dem ersten Display durch das elektronische Gerät (100), wobei die erste Oberfläche ein Vorschaubild eines ersten Bildes (204) und ein Vorschaubild eines zweiten Bildes umfasst; und
Anzeige einer zweiten Oberfläche (205) auf dem ersten Display durch das elektronische Gerät (100) als Reaktion auf eine erste Bedienung des Vorschaubilds des ersten Bildes (204), wobei die zweite Oberfläche (205) Folgendes umfasst:
einen ersten Teil des ersten Bildes (204);
eine zweite Option (209), wobei, wenn eine zweite Bedienung der zweiten Option (209) empfangen wird, das elektronische Gerät (100) einen zweiten Teil des ersten Bildes (204) auf der zweiten Oberfläche (205) als Reaktion auf die zweite Bedienung anzeigt und wobei sich der zweite Teil vom ersten Teil unterscheidet;
eine erste Steuerung (211), wobei, wenn eine dritte Bedienung der ersten Steuerung (211) empfangen wird, das elektronische Gerät (100) den ersten Teil des ersten Bildes (204) als erstes Hintergrundbild des ersten Displays und den zweiten Teil des ersten Bildes (204) als zweites Hintergrundbild des zweiten Displays als Reaktion auf die dritte Bedienung festlegt; und
eine zweite Steuerung (212), wobei die zweite Steuerung (212) in einem ersten Zustand angezeigt wird, und der erste Zustand angibt, dass das erste Hintergrundbild des ersten Displays und das zweite Hintergrundbild des zweiten Displays basierend auf dem ersten Bild (204) gleichzeitig festgelegt werden können.

2. Verfahren nach Anspruch 1, das ferner Folgendes umfasst:
wenn eine vierte Bedienung der zweiten Steuerung (112) empfangen wird, Anzeigen der zweiten Steuerung (112) in einem zweiten Zustand als Reaktion auf die vierte Bedienung; und
wenn sich die zweite Steuerung (112) im zweiten Zustand befindet, Festlegen von Hintergrundbildern, die basierend auf unterschiedlichen Bildern erlangt wurden, auf dem ersten Display und dem zweiten Display als Reaktion auf eine Benutzerbedienung.

3. Verfahren nach Anspruch 1 oder 2, wobei die zweite Oberfläche (205) ferner erste Hinweisinformationen zu der zweiten Steuerung (112) umfasst und die ersten Hinweisinformationen dafür verwendet werden, anzugeben, dass gleichzeitig ein Hintergrundbild für das zweite Display festgelegt werden soll.

4. Verfahren nach Anspruch 1 oder 2, wobei die zweite Oberfläche (205) ferner umfasst: eine erste Option (207); und
wenn der zweite Teil des ersten Bildes (204) auf der zweiten Oberfläche (205) angezeigt wird, zeigt das elektronische Gerät (100) den ersten Teil des ersten Bildes (204) auf der zweiten Oberfläche (205) als Reaktion auf eine Bedienung der ersten Option (207) an.

5. Verfahren nach Anspruch 1 oder 2, wobei das Verfahren weiterhin umfasst: Wenn der zweite Teil des ersten Bildes (204) auf der zweiten Benutzeroberfläche (205) angezeigt wird, wird die Anzeige des ersten Teils des ersten Bildes (204) auf der zweiten Benutzeroberfläche (205) beendet.

6. Verfahren nach Anspruch 4, wobei das Verfahren weiterhin umfasst:
Anzeige einer dritten Benutzeroberfläche durch das elektronische Gerät (100) auf dem zweiten Display, wobei die dritte Benutzeroberfläche das Vorschaubild des ersten Bildes (204) und das Vorschaubild des zweiten Bildes umfasst; und
Anzeige einer vierten Benutzeroberfläche durch das elektronische Gerät (100) auf dem zweiten Display als Reaktion auf eine sechste Bedienung des Vorschaubilds des ersten Bildes (204), wobei die vierte Benutzeroberfläche umfasst:
den zweiten Teil des ersten Bildes (204);
die erste Option (207), wobei bei Empfang einer siebten Bedienung der ersten Option (207) das elektronische Gerät (100) den ersten Teil des ersten Bildes (204) auf der vierten Benutzeroberfläche als Reaktion auf die siebte Bedienung anzeigt;
- die zweite Option (209), wenn der erste Teil des ersten Bildes (204) auf der vierten Benutzeroberfläche angezeigt wird und das elektronische Gerät (100) den zweiten Teil des ersten Bildes (204) auf der vierten Benutzeroberfläche als Reaktion auf eine Bedienung der zweiten Option (209) anzeigt;
die erste Steuerung (211), wobei bei Empfang einer achten Bedienung der ersten Steuerung (211) das elektronische Gerät (100) den zweiten Teil des ersten Bildes (204) als zweiten Hintergrund des zweiten Displays und den ersten Teil des ersten Bildes (204) als ersten Hintergrund des ersten Displays als Reaktion auf die achte Bedienung festlegt; und
die zweite Steuerung (112), wobei die zweite Steuerung (112) im ersten Zustand angezeigt wird, wobei der erste Zustand angibt, dass basierend auf dem ersten Bild (204) gleichzeitig der erste Hintergrund des ersten Displays und der zweite Hintergrund des zweiten Displays eingestellt werden können.

7. Verfahren nach Anspruch 6, weiterhin umfassend:
Beim Empfang einer neunten Bedienung der zweiten Steuerung (112) wird die zweite Steuerung (112) im zweiten Zustand als Reaktion auf die neunte Bedienung angezeigt; und
Wird die zweite Steuerung (112) im zweiten Zustand angezeigt, werden als Reaktion auf eine Benutzerinteraktion Hintergründe, basierend auf verschiedenen Bildern, auf dem ersten und zweiten Display eingestellt.

8. Verfahren nach Anspruch 6 oder 7, wobei die vierte Benutzeroberfläche weiterhin zweite Hinweisinformationen enthält, die mit der zweiten Steuerung (112) verbunden sind, wobei die zweite Hinweisinformation dazu dient, anzuzeigen, dass gleichzeitig ein Hintergrundbild für das erste Display eingestellt werden soll, und
Wenn der erste Teil des ersten Bildes (204) auf der vierten Oberfläche angezeigt wird, wird die Anzeige des zweiten Teils des ersten Bildes (204) auf der vierten Oberfläche gestoppt.

9. Verfahren nach einem der Ansprüche 1 bis 8, wobei die Größe des ersten Teils des ersten Bildes (204) der des ersten Displays entspricht und die Größe des zweiten Teils des ersten Bildes (204) der des zweiten Displays entspricht;
Wobei bedeutet, dass die Größe des ersten Teils der des ersten Displays entspricht: das Seitenverhältnis des ersten Teils ist identisch mit dem Seitenverhältnis des ersten Displays; und
Dass die Größe des zweiten Teils der des zweiten Displays entspricht, bedeutet: Das Seitenverhältnis des zweiten Teils ist identisch mit dem Seitenverhältnis des zweiten Displays.

10. Verfahren nach einem der Ansprüche 1 bis 8, wobei ein Teil des Bildinhalts des zweiten Teils mit einem Teil des Bildinhalts des ersten Teils identisch ist; oder
Der Bildinhalt des zweiten Teils ist ein Teil des Bildinhalts des ersten Teils.

11. Verfahren nach einem der Ansprüche 1 bis 8, wobei, wenn das elektronische Gerät (100) einen Desktop oder eine Sperrbildschirmoberfläche auf dem ersten Display anzeigt, das elektronische Gerät (100) das erste Hintergrundbild auf dem Desktop oder der Sperrbildschirmoberfläche anzeigt; oder
Wenn das elektronische Gerät (100) den Desktop oder die Sperrbildschirmoberfläche auf dem zweiten Display anzeigt, zeigt das elektronische Gerät (100) das zweite Hintergrundbild auf dem Desktop oder der Sperrbildschirmoberfläche an.

12. Verfahren nach Anspruch 1 oder 6, wobei das Verfahren weiterhin umfasst:
Wenn beim ersten Teil des ersten Bildes (204) eine elfte Operation empfangen wird, wird ein dritter Teil des ersten Bildes (204) auf der zweiten Oberfläche (205) als Reaktion auf die elfte Operation angezeigt, wobei die elfte Operation eine der folgenden Operationen oder eine Kombination mehrerer folgender Operationen ist: eine Vergrößerungsoperation, eine Verkleinerungsoperation, eine Bewegungsoperation und eine Unschärfeoperation; und
Wenn das elektronische Gerät (100) eine zwölfte Operation am ersten Steuerelement empfängt, wird der dritte Teil des ersten Bildes (204) als drittes Hintergrundbild des ersten Displays festgelegt und der zweite Teil des ersten Bildes (204) als zweites Hintergrundbild des zweiten Displays als Reaktion auf die zwölfte Operation festgelegt.

13. Verfahren nach Anspruch 1 oder 6, wobei das Verfahren weiterhin umfasst:
wenn auf dem zweiten Teil des ersten Bildes (204) ein dreizehnter Vorgang empfangen wird, Anzeigen eines vierten Teils des ersten Bildes (204) auf der zweiten Oberfläche (205) als Reaktion auf den dreizehnten Vorgang, wobei der dreizehnte Vorgang entweder einer der folgenden Vorgänge oder eine Kombination mehrerer der folgenden Vorgänge ist: ein Hineinzoomen, ein Herauszoomen, eine Bewegungsaktion und ein Unschärfevorgang; und
wenn das elektronische Gerät (100) eine vierzehnte Bedienung am ersten Steuerelement empfängt, wird als Reaktion auf die vierzehnte Bedienung der erste Teil des ersten Bildes (204) als erstes Hintergrundbild auf dem ersten Display und der vierte Teil des ersten Bildes (204) als viertes Hintergrundbild auf dem zweiten Display festgelegt.

14. Verfahren nach Anspruch 1 oder 6, wobei das erste Display ein externes Display ist, das zweite Display ein internes Display ist und das interne sowie das externe Display jeweils auf zwei gegenüberliegenden Seiten des elektronischen Geräts (100) angeordnet sind;
wenn das elektronische Gerät (100) einen Desktop (105) auf dem internen Display anzeigt, umfasst der Desktop das erste Hintergrundbild; und
wenn das elektronische Gerät (100) gefaltet ist, kann das interne Display des elektronischen Geräts (100) gefaltet und verborgen werden und das externe Display des elektronischen Geräts (100) zeigt den Desktop an, wobei der Desktop das zweite Hintergrundbild umfasst.

15. Ein elektronisches Gerät (100), umfassend:
ein erstes Display;
ein zweites Display;
einen oder mehrere Prozessoren (110);
einen Speicher (121);
eine Vielzahl von Anwendungen; und
ein oder mehrere Computerprogramme, wobei ein oder mehrere Computerprogramme im Speicher (121) gespeichert sind und das eine oder die mehreren Computerprogramme Anweisungen beinhalten, die, wenn sie vom elektronischen Gerät (100) ausgeführt werden, das elektronische Gerät (100) dazu befähigen, das Verfahren gemäß einem der Ansprüche 1 bis 14 auszuführen.

## Revendications

1. Procédé de réglage de fond d'écran, appliqué à un dispositif électronique (100), ledit dispositif électronique (100) comprenant un premier affichage et un second affichage, et le procédé comprenant :
l'affichage, par le dispositif électronique (100), d'une première interface (203) sur le premier affichage, la première interface comprenant une vignette d'une première image (204) et une vignette d'une seconde image ; et
l'affichage, par le dispositif électronique (100), d'une seconde interface (205) sur le premier affichage en réponse à une première opération sur la vignette de la première image (204), la seconde interface (205) comprenant :
une première partie de la première image (204) ;
une seconde option (209), où, lorsqu'une seconde opération est reçue sur la seconde option (209), le dispositif électronique (100) affiche une seconde partie de la première image (204) sur la seconde interface (205) en réponse à la seconde opération, et la seconde partie est différente de la première partie ;
un premier contrôle (211), où, lorsqu'une troisième opération est reçue sur le premier contrôle (211), le dispositif électronique (100) définit la première partie de la première image (204) comme premier fond d'écran du premier affichage et la seconde partie de la première image (204) comme second fond d'écran du second affichage en réponse à la troisième opération ; et
un second contrôle (212), le second contrôle (212) étant affiché dans un premier état, et le premier état indiquant la possibilité d'activer la définition simultanée du premier fond d'écran du premier affichage et du second fond d'écran du second affichage sur la base de la première image (204).

2. Procédé selon la revendication 1, comprenant en outre :
lorsqu'une quatrième opération est reçue sur le second contrôle (112), afficher le second contrôle (112) dans un second état en réponse à la quatrième opération ; et
lorsque le second contrôle (112) est dans le second état, définir des fonds d'écran obtenus sur la base d'images différentes sur le premier affichage et le second affichage en réponse à une opération utilisateur.

3. Procédé selon la revendication 1 ou 2, dans lequel la seconde interface (205) comprend en outre une première information d'invite associée au second contrôle (112), et la première information d'invite sert à indiquer la définition simultanée d'un fond d'écran pour le second affichage.

4. Procédé selon la revendication 1 ou 2, dans lequel la seconde interface (205) comprend en outre : une première option (207) ; et
lorsque la seconde partie de la première image (204) est affichée sur la seconde interface (205), le dispositif électronique (100) affiche la première partie de la première image (204) sur la seconde interface (205) en réponse à une opération sur la première option (207).

5. Le procédé selon la revendication 1 ou 2, dans lequel le procédé comprend en outre : lorsque la seconde partie de la première image (204) est affichée sur la seconde interface (205), cesser d'afficher la première partie de la première image (204) sur la seconde interface (205).

6. Le procédé selon la revendication 4, dans lequel le procédé comprend en outre :
afficher, par le dispositif électronique (100), une troisième interface sur le second écran, la troisième interface comprenant la vignette de la première image (204) et la vignette de la seconde image ; et
afficher, par le dispositif électronique (100), une quatrième interface sur le second écran en réponse à une sixième opération sur la vignette de la première image (204), la quatrième interface comprenant :
la seconde partie de la première image (204) ;
la première option (207), lorsqu'une septième opération sur la première option (207) est reçue, le dispositif électronique (100) affiche la première partie de la première image (204) sur la quatrième interface en réponse à la septième opération ;
- la seconde option (209), lorsque la première partie de la première image (204) est affichée sur la quatrième interface, le dispositif électronique (100) affiche la seconde partie de la première image (204) sur la quatrième interface en réponse à une opération sur la seconde option (209) ;
le premier contrôle (211), lorsqu'une huitième opération sur le premier contrôle (211) est reçue, le dispositif électronique (100) définit la seconde partie de la première image (204) comme second fond d'écran du second écran et définit la première partie de la première image (204) comme premier fond d'écran du premier écran en réponse à la huitième opération ; et
le second contrôle (112), le second contrôle (112) étant affiché dans le premier état, le premier état indiquant qu'il est possible d'activer la définition simultanée du premier fond d'écran du premier écran et du second fond d'écran du second écran à partir de la première image (204).

7. Le procédé selon la revendication 6, comprenant en outre :
lorsqu'une neuvième opération sur le second contrôle (112) est reçue, afficher le second contrôle (112) dans le second état en réponse à la neuvième opération ; et
lorsque le second contrôle (112) est dans le second état, définir les fonds d'écran obtenus à partir d'images différentes sur le premier écran et le second écran en réponse à une opération utilisateur.

8. Le procédé selon la revendication 6 ou 7, dans lequel la quatrième interface comprend en outre une seconde information d'invite associée au second contrôle (112), et la seconde information d'invite sert à indiquer la définition simultanée d'un fond d'écran du premier écran, et
lorsque la première partie de la première image (204) est affichée sur la quatrième interface, la deuxième partie de la première image (204) cesse d'être affichée sur la quatrième interface.

9. Le procédé selon l'une quelconque des revendications 1 à 8, dans lequel la taille de la première partie de la première image (204) correspond à celle du premier affichage, et la taille de la deuxième partie de la première image (204) correspond à celle du second affichage ;
dans lequel le fait que la taille de la première partie corresponde à celle du premier affichage signifie : le rapport d'aspect de la première partie est identique au rapport d'aspect du premier affichage ; et
le fait que la taille de la seconde partie corresponde à celle du second affichage signifie : le rapport d'aspect de la seconde partie est identique au rapport d'aspect du second affichage.

10. Le procédé selon l'une quelconque des revendications 1 à 8, dans lequel une partie du contenu d'image de la seconde partie est identique à une partie du contenu d'image de la première partie ; ou
le contenu d'image de la seconde partie est une partie du contenu d'image de la première partie.

11. Le procédé selon l'une quelconque des revendications 1 à 8, dans lequel lorsque le dispositif électronique (100) affiche un bureau ou une interface d'écran de verrouillage sur le premier affichage, le dispositif électronique (100) affiche le premier fond d'écran sur le bureau ou l'interface d'écran de verrouillage ; ou
lorsque le dispositif électronique (100) affiche le bureau ou l'interface d'écran de verrouillage sur le second affichage, le dispositif électronique (100) affiche le deuxième fond d'écran sur le bureau ou l'interface d'écran de verrouillage.

12. Le procédé selon la revendication 1 ou 6, dans lequel le procédé comprend en outre :
lorsqu'une onzième opération sur la première partie de la première image (204) est reçue, afficher une troisième partie de la première image (204) sur la seconde interface (205) en réponse à l'onzième opération, l'onzième opération étant une opération ou une combinaison d'opérations parmi les suivantes : opération de zoom avant, opération de zoom arrière, opération de déplacement et opération de flou ; et
lorsque le dispositif électronique (100) reçoit une douzième opération sur le premier contrôle, définir la troisième partie de la première image (204) comme troisième fond d'écran du premier affichage et définir la seconde partie de la première image (204) comme second fond d'écran du second affichage en réponse à la douzième opération.

13. Le procédé selon la revendication 1 ou 6, dans lequel le procédé comprend en outre :
lorsqu'une treizième opération est reçue sur la deuxième partie de la première image (204), affichage d'une quatrième partie de la première image (204) sur la deuxième interface (205) en réponse à la treizième opération, la treizième opération étant une opération ou une combinaison de plusieurs des opérations suivantes : une opération de zoom avant, une opération de zoom arrière, une opération de déplacement et une opération de flou ; et
lorsque le dispositif électronique (100) reçoit une quatorzième opération sur le premier contrôle, définir la première partie de la première image (204) comme premier fond d'écran du premier affichage et définir la quatrième partie de la première image (204) comme quatrième fond d'écran du second affichage en réponse à la quatorzième opération.

14. Le procédé selon la revendication 1 ou 6, dans lequel le premier affichage est un affichage externe, le deuxième affichage est un affichage interne, et l'affichage interne et l'affichage externe sont respectivement situés sur deux surfaces opposées du dispositif électronique (100) ;
lorsque le dispositif électronique (100) affiche un bureau (105) sur l'affichage interne, le bureau comprend le premier fond d'écran ; et
lorsque le dispositif électronique (100) est plié, l'affichage interne du dispositif électronique (100) peut être plié et caché, et l'affichage externe du dispositif électronique (100) affiche le bureau, le bureau comprenant le deuxième fond d'écran.

15. Un dispositif électronique (100), comprenant :
un premier affichage ;
un deuxième affichage ;
un ou plusieurs processeurs (110) ;
une mémoire (121) ;
une pluralité d'applications ; et
un ou plusieurs programmes informatiques, lesdits programmes étant stockés dans la mémoire (121), et comprenant des instructions, et lorsque ces instructions sont exécutées par le dispositif électronique (100), le dispositif électronique (100) est apte à exécuter le procédé selon l'une quelconque des revendications 1 à 14.
